(19) Europäisches Patentamt
European Patent Office
Office européen des brevets

(11) EP 1 489 380 A1

(12) **EUROPEAN PATENT APPLICATION**
published in accordance with Art. 158(3) EPC

(43) Date of publication:
**22.12.2004 Bulletin 2004/52**

(21) Application number: **03746411.2**

(22) Date of filing: **28.03.2003**

(51) Int Cl.[7]: **G01C 21/00**, G08G 1/0969

(86) International application number:
**PCT/JP2003/004023**

(87) International publication number:
**WO 2003/087723 (23.10.2003 Gazette 2003/43)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **28.03.2002 JP 2002091650**
**28.03.2002 JP 2002092210**

(71) Applicant: **MATSUSHITA ELECTRIC INDUSTRIAL CO., LTD.**
**Kadoma-shi, Osaka 571-8501 (JP)**

(72) Inventor: **ADACHI, Shinya**
**Yokohama-shi, Kanagawa 227-0038 (JP)**

(74) Representative: **Holmes, Miles et al**
**Novagraaf International S.A.**
**25, avenue du Pailly**
**1220 Les Avanchets, Geneva (CH)**

(54) **RELATIVE POSITION INFORMATION CORRECTION DEVICE, RELATIVE POSITION INFORMATION CORRECTION METHOD, RELATIVE POSITION INFORMATION CORRECTION PROGRAM, SHAPE VECTOR GENERATION DEVICE, SHAPE VECTOR GENERATION METHOD, AND SHAPE VECTOR GENERATION PROGRAM**

(57) The objective of the present invention is to provide a relative location data correction apparatus, a relative location data correction method and a relative location data correction program that can cope with the shifting of a relative location between different digital map databases, and can accurately display a desired point.

The relative location data correction apparatus of the invention includes: a transmission apparatus (100a), for transmitting to a reception apparatus (200a) event information, such as that for a traffic accident or traffic congestion, that is prepared based on a digital map database (101); and the reception apparatus (200a), for employing the event information received from the transmission apparatus (100a) to display an event occurrence point on a map provided by a digital map database (207), and for correcting the location of the event occurrence point before being displayed. The transmission apparatus (100) calculates the total length of a road section, and transmits, to the reception apparatus (200a), shape data expression information that includes the total length. The reception apparatus (200a) calculates the total length of the road section, and employs the two total lengths to correct the relative location of the event occurrence point.

FIG. 1

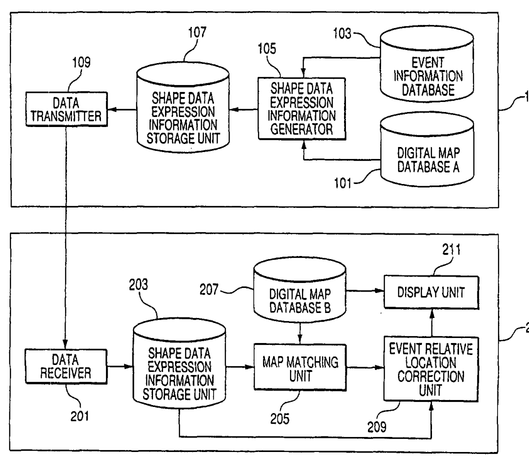


EP 1 489 380 A1

## Description

Relative Location Data Correction Apparatus, Relative Location Data Correction Method, Relative Location Data Correction Program, Shape Data Generation Apparatus, Shape Data Generation Method, and Shape Data Generation Program

<Technical Field>

The present invention relates to a relative location data correction apparatus, a relative location data correction method and a relative location data correction program for absorbing a relative location difference between different digital map databases and for accurately displaying a desired point. The present invention also relates to a shape data generation apparatus, a shape data generation method and a shape data generation program for setting a feature node for a shape data that is to be generated, based on map data stored in a digital map database, to indicate a predetermined road section.

<Background Art>

A car navigation system used, for example, for vehicles has a function that employs a digital map database and location data, obtained based on information received by a GPS receiver, to display on a screen a map of the periphery of a driver's vehicle, or to display, together with a map, a traveling locus and the results of a search made for a route to a destination. The car navigation system also has a function for receiving traffic information, such as accident information and traffic congestion information, and displaying, for example, a location whereat an accident has occurred and a traffic congestion point, and a function that employs travel time as guidance for a route.

As is shown in Fig. 17, nodes and links that can represent road sections are stored in a digital map database employed by the car navigation system. A node is a point on a map that is designated as an intersection or a cross point of boundaries, and the location of the node is represented using latitude and longitude. As information concerning a node, connections with other nodes for representing roads, for example, are also stored. A link is a line for connecting the nodes. When a link is a curved line, an interpolation point is set for the link, and as well as for the node, the location of this point is represented by using the latitude and the longitude. In the following explanation given for a shape data, both the node and the interpolation point are referred to as nodes, and a line segment between the nodes (the node or the interpolation point described above) is referred to as a link.

For the car navigation system, in order to display a location whereat an accident has occurred or a traffic congestion point, for example, a "shape data", indicating a predetermined road section, is created based on map data stored in a digital map database, and is distributed to individual vehicles together with event information, such as that for accidents and traffic congestion. As is shown in Fig. 14(a), the shape data includes data for a shape data array identification number, a vector data type such as a road type, the total number of nodes constituting the shape data and their node numbers, and absolute coordinates (latitude and longitude) or the relative coordinates of each node. Two types of nodes are used to form the shape data. One node type is a "base point node" that is represented by the absolute location (e.g., the absolute latitude and longitude and the absolute bearing), and several base point nodes are provided in a road section. The other node type is a "relative node" that is represented by a location relative to an adjacent node (e.g., the relative coordinates, or the declination and the relative distance).

In Fig. 13(a) is shown an example shape data wherein a road section is represented by using a plurality of nodes. As is shown in Fig. 13(a), the shape data is formed of a base point node 11 and relative nodes 13, and the base point node 11 is set at a starting point, such as an intersection, while the relative nodes 13 are set downstream from the base point node 11 along the road. It should be noted that the base point node is not always set at the starting point of the shape data as is shown in the example in Fig. 13(a), and may be set at the terminal end or at the midpoint. Further, the base point node is not always located upstream of the relative nodes, and may be located downstream of the relative nodes.

By using the shape data, event information, such as that for accidents and traffic congestion, is represented, for example, as being several hundred meters from the base point node 11, as is shown in Fig. 13(b). An example data structure for the event information is shown in Fig. 14(b). As is shown in Fig. 14(b), the event information includes data for a "reference shape data array number", which indicates a road section to which an event occurrence point belongs, an event type, such as the suspension of vehicle traffic or traffic congestion, and the relative location of an event. Especially, the relative location of the event is indicated by using the distance from the base point node of the shape data, which is represented by the reference shape data number, to the event occurrence point.

In Japan, since digital map databases are prepared by several different companies, a plurality of types of digital map databases are sold on the market. However, the method for preparing a digital map database is not uniform, and differs slightly, depending on the company, and accordingly, the setup of a node differs slightly in accord with the skill of an operator.

As an available example, as is shown in Fig. 15, even for the same road section, seven nodes are designated in a digital map database (a) provided by company A, while only four nodes are designated in a digital map database (b) provided by company B. The total length for the case (company A) where many nodes are designated is generally greater than the total length for the case (company B) where few nodes are designated.

Therefore, when the digital map database provided by company A is employed to generate a shape data and the event information that an accident occurred at a point a specific distance from the base point node of the shape data is distributed together with this shape data, the event occurrence point on the display will be shifted for a car navigation system using the digital map database provided by company B. For example, when, as is shown in Fig. 16, the event occurrence point is 300 m from the base point node 11 of a shape data that is prepared based on the digital map database provided by A, the event occurrence point is displayed 350 m to the rear of the actual point when using the digital map database provided by company B. Furthermore, not only the is the location on the display shifted, but also, as another problem, the event occurrence point can not be displayed because of the difference in the total lengths.

For different digital map databases, the total length of the same road section also varies in accordance with the precision of the original map. An original map having a larger scale is better, e.g., a scale of 1/2500 is better than one of 1/25000, so that nodes can be more densely designated. Since nodes are not generally designated densely for an original map having a small scale (1/25000) compared with an original map having a large scale (1/2500), the total length differs for the same road section for maps prepared based on original maps having different scales. Therefore, the same problem occurs as was previously described, i.e., either the event occurrence point is shifted on a display or can not be displayed.

To resolve the above described problem, it is one objective of the present invention to provide a relative location data correction apparatus, a relative location data correction method, and a relative location data correction program that can absorb, for a relative location, a difference between different digital map databases, and can accurately display a desired point.

In the above described car navigation system, in order to display on a map a location whereat an accident has occurred or one whereat traffic is congested, a "shape data" designating a predetermined road section is generated based on map data stored in a digital map database, and is distributed to individual vehicles, together with event information, such as that referring to an accident or to traffic congestion. An apparatus for generating a shape data is called an encoder, and an apparatus mounted on individual vehicles to perform a predetermined process based on the shape data, for example, is called a decoder.

When the shape data explained above is transmitted to an individual vehicle with the event information, the decoder mounted in the vehicle performs a process to display, on a display screen, a road section or an event occurrence point indicated by the shape data. At this time, the decoder performs a matching process (hereinafter referred to as "map matching") so that a road section represented by the shape data is displayed, while matching a road section on a map provided by the digital map database. After the map matching has been completed, the decoder employs the received event information to display the event occurrence point on the screen.

It is preferable, because of the reduction in the data amount, that the shape data described in the conventional example be longer for a continuous road section. Specifically, a large amount of data is required for a base point node that represents an absolute location and a smaller amount of data is required for a the relative node that represents a relative location. Thus, when a long road, such as National Route 1, is to be transmitted as a plurality of shape datas, each of which represents a segment of the road, the number of base point nodes is increased, and accordingly, the total amount of data is increased.

However, when a digital map database employed by an encoder differs from a digital map database employed by a decoder, and when a shape data is extended, a problem arises in that a location shift occurs when the decoder displays an event occurrence point represented as a location relative to the base point node.

As is shown in Fig. 16, the digital map data preparation method for the same road section is not uniform and differs depending on the company. Therefore, there is a case wherein seven nodes are designated, according to a digital map database (a) that is provided by a company A and is employed for an encoder, and only four nodes are designated, according to a digital map database (b) that is provided by a company B and is employed by the decoder. The total length of a shape data is obtained by adding the lengths of links, and generally, the total length of a shape data wherein many nodes are designated (company A) is longer than the total length of a shape data where few nodes are designated (company B).

Therefore, when a shape data generated by an encoder is based on the digital map database provided by company A, and when event information indicates that an accident occurred at a point a specific distance from the base point node in the shape data is distributed, together with the shape data, the event occurrence point is shifted on a display for a decoder that employs the digital map database provided by company B. For example, when as is shown in Fig. 16 the event occurrence point is 300 m from the base node point 11 of the shape data that is generated based on the digital map database provided by company A, the event occurrence point is displayed at a location 350 m to the rear of the actual point when using the digital map database provided by company B. Furthermore, not only is the displayed point shifted, but in addition, it may not be able to display the event occurrence point because of the difference in the total lengths.

As is described above, since when a digital map database employed by an encoder differs from a digital map database employed by a decoder, a problem is that if the total length of a road section represented by a shape data differs for the encoder and the decoder, the decoder can not obtain a desired result using map matching.

While taking the above conventional problems into account, it is another objective of the present invention to provide a shape data generation apparatus, a shape data generation method and a shape data generation program that make it possible for a shape data to be generated, based on the use by an encoder and a decoder of different digital map databases, for the location of an event occurrence point, in a predetermined road section, to be displayed by the decoder without being shifted.

It is an additional objective of the present invention to provide a shape data generation apparatus, a shape data generation method and a shape data generation program whereby, when an encoder and a decoder employ different digital map database, the decoder can accurately perform map matching.

<Disclosure of the Invention>

To achieve these objectives, provided is a relative location data correction apparatus, according to the present invention, for correcting a shift that occurs between different map databases for the location of a predetermined point that is relatively indicated, wherein relative location data for an event occurrence point, which is indicated based on a location relative to a node that is designated in a shape data obtained from a first map database, is corrected by using the total length of a shape data that is stored in the first map database and that the event occurrence point belongs to, and the total length of a shape data that is stored in a second database and that the event occurrence point belongs to. Therefore, when the first map database and the second map database differ from each other, the corrected relative location data for the event occurrence point can exactly represent the event occurrence point.

Further, to correct the relative location data for the event occurrence point, the relative location data correction apparatus employs a ratio of the total length of the shape data that is stored in the first map database and that the event occurrence point belongs to, to the total length of the shape data that is stored in the second map database and that the event occurrence point belongs to.

Further, the relative location data correction apparatus according to this invention is employed for a system comprising:

a transmission apparatus that includes

the first map database,

location expression conversion means for the conversion, based on a shape data that is obtained from the first map database and represents the periphery of the event occurrence point, of the event occurrence point into a relative location of a node designated in the shape data, and

first total length determination means for determining the total length of the shape data that is obtained from the first map database and that the event occurrence point belongs to,

wherein the transmission apparatus transmits the shape data for the periphery of the event occurrence point, including relative location data for the event occurrence point and the total length of the shape data determined by the first total length determination means; and

a reception apparatus that includes

the second map database,

second total length determination means for determining the total length of a shape data and that is obtained from the second map database and that the event occurrence point belongs to,

first relative location correction means for employing the total length determined by the first total length determination means and the total length determined by the second total length determination means to correct a relative location for the event occurrence point that has been obtained by the location expression correction means, and

event occurrence point specification means for specifying the event occurrence point, based on a relative location that has been corrected by the first relative location correction means, and the shape data obtained from the second.map database.

With this arrangement, when the reception apparatus receives relative location data for an event occurrence point that has been converted by the location expression conversion means of the transmission apparatus, the relative location of the event occurrence point is corrected by the first relative location correction means. As a result, the event occurrence point can be correctly displayed.

Furthermore, the relative location data correction apparatus according to this invention is employed for a system comprising:

a transmission apparatus that includes

the first map database, and

location expression conversion means for the conversion, based on a shape data that is obtained from the first map database and represents the periphery of the event occurrence point, of the event occurrence point into a relative location of a node designated in the shape data,

wherein the transmission apparatus transmits relative location data for the event occurrence point and the shape data for the periphery of the event occurrence point, including the total length of the shape data determined by the first total length determination means; and

a reception apparatus that includes

first total length determination means for determining the total length of the shape data that is transmitted by the transmission apparatus and that the event occurrence point belongs to,

the second map database,

second total length determination means for determining the total length of a shape data that is obtained from the second map database and that the event occurrence point belongs to,

first relative location correction means for employing the total length determined by the first total length determination means and the total length determined by the second total length determination means to correct a relative location for the event occurrence point that has been obtained by the location expression correction means, and

event occurrence point specification means for specifying the event occurrence point, based on a relative location that has been corrected by the first relative location correction means, and the shape data obtained from the second map database.

As is described above, since the reception apparatus determines the total length of a shape data to which an event occurrence point obtained from the first map database belongs, and since data transmitted by the transmission apparatus does not include the total length, the amount of data to be transmitted by the transmission apparatus can be reduced.

For the relative location data correction apparatus according to the present invention, the transmission apparatus further includes:

shape data compression/transformation means for performing an irreversible compression process, or a shape transformation process, for a shape data obtained from the first map database;

first shape data decoding means for decoding the shape data, which has been processed by the shape data compression/transformation means, that the event occurrence point belongs to;

third total length determination means for determining the total length of the shape data, which has been decoded by the first shape data decoding means, that the event occurrence point belongs to; and

second relative location correction means for employing the total length determined by the first total length determination means and the total length determined by the third total length determination means to correct the relative location of the event occurrence point obtained by the location expression conversion means,

wherein the transmission apparatus transmits the relative location of the event occurrence point corrected by the second relative location correction means and the shape data, which is obtained by the shape data compression/transformation means through the irreversible compression process or the shape transformation process, that includes the total length of the shape data determined by the third total length determination means. The reception apparatus further includes:

second shape data decoding means for decoding the shape data received from the transmission apparatus,

wherein the first relative location correction means employs the total length determined by the third total length determination means and the total length determined by the second total length determination means to correct the relative location of the event occurrence point that has been corrected by the second relative location correction means.

With this arrangement, when the total length of the shape data to be transmitted by the transmission apparatus is changed through irreversible compression or the shape transformation process, the total length of the shape data following the compression or the transformation process is obtained in advance, and the relative location is corrected in accordance with the total length. Then, the transmission apparatus transmits the corrected relative location data to the reception apparatus, together with the shape data that has been compressed or transformed. Therefore, even when the reception apparatus decodes the shape data compressed or transformed by the transmission apparatus, and when as a result, the total length of the shape data is changed, the event occurrence point can be correctly displayed.

For the relative location data correction apparatus according to the present invention, the transmission apparatus further includes:

shape data compression/transformation means for performing an irreversible compression process, or a shape transformation process, for a shape data obtained from the first map database;

first shape data decoding means for decoding the shape data, which has been processed by the shape data compression/transformation means, that the event occurrence point belongs to;

third total length determination means for determining the total length of the shape data, which has been decoded by the first shape data decoding means, that the event occurrence point belongs to; and

second relative location correction means for employing the total length determined by the first total length determination means and the total length determined by the third total length determination means to correct the relative location of the event occurrence point obtained by the location expression conversion means,

wherein the transmission apparatus transmits the relative location of the event occurrence point corrected by the second relative location correction means and the shape data that is obtained by the shape data compression/transformation means through the irreversible compression process or the shape transformation process. The reception apparatus further includes:

second shape data decoding means for decoding the shape data received from the transmission apparatus; and
third total length determination means for determining the total length of a shape data that is decoded by the second shape data decoding means and that the event occurrence point belongs to,

wherein the first relative location correction means employs the total length determined by the third total length determination means and the total length determined by the second total length determination means to correct the relative location of the event occurrence point that has been corrected by the second relative location correction means.

With this arrangement, when the total length of the shape data to be transmitted by the transmission apparatus is changed through irreversible compression or the shape transformation process, the total length of the shape data following the compression or the transformation process is obtained in advance, and the relative location is corrected in accordance with the total length. Then, the transmission apparatus transmits the corrected relative location data to the reception apparatus, together with the shape data that has been compressed or transformed. Therefore, even when the reception apparatus decodes the shape data compressed or transformed by the transmission apparatus, and when as a result, the total length of the shape data is changed, the event occurrence point can be correctly displayed.

Further, for the relative location data correction apparatus of this invention, the shape data has a feature node designated between nodes located at both terminal ends, and the location expression conversion means converts an event occurrence point into a location relative to the feature node in the shape data. Since a cumulative error that may be included in a distance from the feature node to the event occurrence point is small, the event occurrence point can be exactly displayed.

For the relative location data correction apparatus of this invention, at least two feature nodes are designated in a shape data, and when an event occurrence point is located between the two feature nodes, the first, second and third total length determination means determine the total length of the distance between the two feature nodes. Since the total length between the feature nodes is shorter than the total length of the shape data, the cumulative error that may be included in the total length of the distance between the feature nodes is smaller than the cumulative error that may be included in the total length of the shape data. When the cumulative error for the total length is small, the calculation performed to correct the relative location of the event occurrence point can be performed more accurately, and a corrected relative location can be accurately obtained. As a result, the event occurrence point can be exactly displayed.

In addition, for the relative location data correction apparatus according to the invention, the first, second and third total length determination means determine the total length of the shape data through calculation or based on a value defined in advance.

Further, for the relative location data correction apparatus of the invention, the transmission apparatus transmits shape data attribute information for identification and the types of the feature nodes designated in the shape data.

Furthermore, for the relative location data correction apparatus of the invention, each of the feature nodes is designated at a point whereat an angle difference in a predetermined area for a link constituting the shape data is equal to or greater than a predetermined angle.

Further, provided is a relative location data correction method, according to the present invention, for correcting a shift that occurs between different map databases for the location of a predetermined point that is relatively indicated, whereby relative location data for an event occurrence point, which is indicated based on a location relative to a node that is designated in a shape data obtained from a first map database, is corrected by using the total length of a shape data that is stored in the first map database and that the event occurrence point belongs to, and the total length of a shape data that is stored in a second database and that the event occurrence point belongs to.

Further, to correct the relative location data for the event occurrence point, the relative location data correction method employs a ratio of the total length of the shape data that is stored in the first map database and that the event occurrence point belongs to, to the total length of the shape data that is stored in the second map database and that the event occurrence point belongs to.

Further, the relative location data correction method according to this invention comprises:

a location expression conversion step of the conversion, based on a shape data that is obtained from the first map database and represents the periphery of the event occurrence point, of the event occurrence point into a relative location of a node designated in the shape data;
a first total length determination step of determining the total length of the shape data that is obtained from the first map database and that the event occurrence point belongs to;
a transmission step of transmitting relative location data for the event occurrence point and the shape data for the periphery of the event occurrence point, including the total length of the shape data determined at the first total length determination step;
a second total length determination step of determining the total length of a shape data and that is obtained from the second map database and that the event occurrence point belongs to; and
a first relative location correction step of employing the total length determined at the first total length determination step and the total length determined at the second total length determination step to correct a relative location for the event, occurrence point that has been obtained at the location expression correction step.

Furthermore, the relative location data correction method according to this invention comprises:

a location expression conversion step of the conversion, based on a shape data that is obtained from the first map database and represents the periphery of the event occurrence point, of the event occurrence point into a relative location of a node designated in the shape data;
a transmission step of transmitting relative location data for the event occurrence point and the shape data for the periphery of the event occurrence point;
a first total length determination step of determining the total length of the shape data that is transmitted at the transmission step and that the event occurrence point belongs to;
a second total length determination step of determining the total length of a shape data and that is obtained from the second map database and that the event occurrence point belongs to; and
a first relative location correction step of employing the total length determined at the first total length determination step and the total length determined at the second total length determination step to correct a relative location for the event occurrence point that has been obtained at the location expression correction step.

Furthermore, for the relative location data correction method according to the present invention comprises:

a shape data compression/transformation step of performing an irreversible compression process, or a shape transformation process, for a shape data obtained from the first map database;
a first shape data decoding step of decoding the shape data, which has been processed by the shape data compression/transformation means, that the event occurrence point belongs to;
a third total length determination step of determining the total length of the shape data, which has been decoded at the first shape data decoding step, that the event occurrence point belongs to; and
a second relative location correction step of employing the total length determined at the first total length determination step and the total length determined at the third total length determination step to correct the relative location of the event occurrence point obtained at the location expression conversion step; and
a second shape data decoding step of decoding the shape data transmitted at the transmission step,
whereby, at the first relative location correction step, the total length determined at the third total length determination step and the total length determined at the second total length determination step are employed to correct the relative location of the event occurrence point that has been corrected at the second relative location correction step.

In addition, for the relative location data correction method according to the present invention comprises:

a shape data compression/transformation step of performing an irreversible compression process, or a shape transformation process, for a shape data obtained from the first map database;
a first shape data decoding step of decoding the shape data, which has been processed by the shape data compression/transformation means, that the event occurrence point belongs to;
a third total length determination step of determining the total length of the shape data, which has been decoded at the first shape data decoding step, that the event occurrence point belongs to; and
a second relative location correction step of employing the total length determined at the first total length determination step and the total length determined at the third total length determination step to correct the relative location of the event occurrence point obtained at the location expression conversion step;
a second shape data decoding step of decoding the shape data transmitted at the transmission step; and
a third total length determination step of determining the total length of the shape data that is decoded at the second shape data decoding step and that the event occurrence point belongs,

whereby, at the first relative location correction step, the total length determined at the third total length determination step and the total length determined at the second total length determination step are employed to correct the relative location of the event occurrence point that has been corrected at the second relative location correction step.

Further, for the relative location data correction method of this invention, the shape data has a feature node designated between nodes located at both terminal ends, and at the location expression conversion step, an event occurrence point is converted into a location relative to the feature node in the shape data.

For the relative location data correction method of this invention, at least two feature nodes are designated in a shape data, and when an event occurrence point is located between the two feature nodes, the total length of the distance between the two feature nodes is determined at the first, second and third total length determination step.

In addition, for the relative location data correction method according to the invention, at the first, second and third total length determination step, the total length of the shape data is determined through calculation or based on a value defined in advance.

Further, for the relative location data correction method of the invention, shape data attribute information for identification and the types of the feature nodes designated in the shape data are transmitted at the transmission step.

Furthermore, for the relative location data correction method of the invention, each of the feature nodes is designated at a point whereat an angle difference in a predetermined area for a link constituting the shape data is equal to or greater than a predetermined angle.

A relative location data correction program according to the present invention permits a computer to perform a relative location data correction method according to one of claims 12 to 22.

Moreover, provided is a shape data generation apparatus according to the present invention, for obtaining map data from a map database and for generating a shape data representing a predetermined section, wherein a feature node is designated as a point, in a section or in the periphery of the section representing a shape data generated based on the map database, that satisfies a predetermined condition, and wherein the shape data is generated or changed so as to include the feature node. Therefore, when an apparatus that employs a map database differing from the above map database performs map matching for a shape data, erroneous matching or a shift in the matching does not occur so long as the shaped vector has been thus generated or changed. As a result, accurate map matching can be performed.

The shape data generation apparatus according to the invention alters relative location data for an event occurrence point, which is represented as a location relative to a node designated in a shape data generated based on the map database, into a location relative to a feature node nearest the event occurrence point. Since the distance between the event occurrence point and the feature node is shorter than the distance between the event occurrence point and another node, an error included in the relative location representing the event occurrence point is small. Therefore, when an apparatus employing a map database differing from the above described map database displays the event occurrence point, a locationing shift does not occur or occurs less frequently.

Furthermore, the shape data generation apparatus according to the invention determines whether a starting point or an end point for a shape data generated based on the map database satisfies the predetermined condition. In accordance with the starting point or the end point that does not satisfy the predetermined condition, the shape data generation apparatus determines whether there is a point, within a predetermined distance in the shape data, that satisfies the predetermined condition, and designates feature nodes at the starting point and the end point for the shape data, or near the starting point and the end point for the shape data. Since the feature nodes are designated at both ends of the shape data, the ends of the shape data can be correctly matched.

Further, the shape data generation apparatus of the invention selects a point that is located within a predetermined distance, along a shape data, from a node or a feature node designated at a starting point or an end point for the shape data that satisfies a predetermined condition, and designates the selected point as a first feature node. Then, the shape data generation apparatus selects a point that is located within a predetermined distance inward, along the shape data, of an n-th (n is a natural number) feature node that satisfies the predetermined condition, and designates the selected point as an (n+1)-th feature node. Therefore, when map matching is performed for a shape data representing a curved section, a feature node designated at a curve point need only be matched with a curve point on map data provided from the map database to obtain desired results. Further, since the distance between an event occurrence point and a feature node can be reduced, an error included in the relative location representing the event occurrence point can also be reduced.

Furthermore, for the shape data generation apparatus of the invention, the point that satisfies the predetermined condition is a point for which an absolute declination value, in a predetermined area between two continuous links, is equal to or greater than a predetermined value. Therefore, for map matching, the location can more easily be determined.

Provided is a shape data generation method according to the present invention, for obtaining map data from a map database and for generating a shape data representing a predetermined section, whereby a feature node is designated as a point, in a section or in the periphery of the section representing a shape data generated based on the map database, that satisfies a predetermined condition, and whereby the shape data is generated or changed so as to include the feature node.

The shape data generation method according to the invention comprises the steps of:

updating relative location data for an event occurrence point, which is represented as a location relative to a node designated in a shape data generated based on the map database, into a location relative to a feature node nearest the event occurrence point.

Furthermore, the shape data generation method according to the invention comprises the steps of:

determining whether a starting point or an end point for a shape data generated based on the map database satisfies the predetermined condition;
determining, in accordance with the starting point or the end point that does not satisfy the predetermined condition, whether there is a point, within a predetermined distance in the shape data, that satisfies the predetermined condition; and
designating feature nodes at the starting point and the end point for the shape data, or near the starting point and the end point for the shape data.

Further, the shape data generation method of the invention comprises the steps of:

selecting a point that is located within a predetermined distance, along a shape data, from a node or a feature node designated at a starting point or an end point for the shape data that satisfies a predetermined condition, and designating the selected point as a first feature node; and
selecting a point that is located within a predetermined distance inward, along the shape data, of an n-th (n is a natural number) feature node that satisfies the predetermined condition, and designating the selected point as an (n+1)-th feature node.

Furthermore, for the shape data generation method of the invention, the point that satisfies the predetermined condition is a point for which an absolute declination value, in a predetermined area between two continuous links, is equal to or greater than a predetermined value.

A shape data generation program according to the present invention permits a computer to perform a shape data generation method according to one of claims 29 to 33.

<Brief Description of the Drawings>

Fig. 1 is a block diagram showing a car navigation system comprising a relative location data correction apparatus according to a first embodiment of the present invention;
Fig. 2 shows example data structures for shape data expression information according to the first embodiment, with (a) being an explanatory diagram showing an example data structure for a shape data to which a total length Le is added, and (b) being an explanatory diagram showing an example data structure for event information that is converted by a shape data expression data generator;
Fig. 3 is a flowchart showing the operation of the car navigation system comprising the relative location data correction apparatus according to the first embodiment;
Fig. 4 is a flowchart showing the operation of the car navigation system comprising a relative location data correction apparatus according to another mode;
Fig. 5 is a block diagram showing a car navigation system comprising a relative location data correction apparatus according to a second embodiment of the present invention;
Figs. 6(a) and 6(b) show example data structures for shape data expression information according to the second embodiment, Fig. 6(a) is an explanatory diagram showing an example data structure for compressed shape data and Fig. 6(b) is an explanatory diagram showing an example data structure for event information converted by a shape data expression data generator;
Fig. 7 is a flowchart showing the operation of the car navigation system comprising the relative location data correction apparatus according to the second embodiment;
Fig. 8 shows example data structures for shape data expression information according to a third embodiment, with (a) being an explanatory diagram showing an example data structure for compressed shape data and (b) being an explanatory diagram showing an example data structure for event information converted by a shape data expression data generator;
Fig. 9 is an explanatory diagram showing one part of a road section that includes a feature node according to the third embodiment;
Fig. 10 is a flowchart showing the operation of a car navigation system comprising a relative location data correction apparatus according to the third embodiment;
Fig. 11 is an explanatory diagram showing an example data structure for shape data attribute information;

Fig. 12 is a flowchart showing the operation, of the car navigation system comprising the relative location data correction apparatus according to the third embodiment, for designating and transmitting shape data attribute information;

Fig. 13 is an explanatory diagram showing an example shape data (a) represented by using a plurality of nodes, and an example display (b) for an event occurrence point;

Fig. 14 is an explanatory diagram showing example data structures for a shape data and event information;

Fig. 15 is an explanatory diagram showing example nodes that represent the same road section based on a digital map database (a) provided by a company A and a digital map database (b) provided by a company B;

Fig. 16 is an explanatory diagram showing example displays for an event occurrence point using different map databases;

Fig. 17 is an explanatory diagram showing an example data structure for a digital map database;

Fig. 18 is a block diagram showing a car navigation system comprising a shape data generation apparatus according to one mode of the present invention;

Fig. 19 shows example data structures for shape data expression data according to the mode, with (a) being an explanatory diagram showing an example data structure for a shape data, (b) being an explanatory diagram showing an example data structure for event information and (c) being an explanatory diagram showing an example data structure for feature node information;

Fig. 20 is an explanatory diagram showing a case wherein a feature node is designated at the starting point and the end point of a shape data and at intersections near the starting point and the end point;

Fig. 21 is an explanatory diagram showing a case wherein feature nodes are designated at intersections along a shape data;

Fig. 22 is an explanatory diagram showing example event information for which a relative location expression for an event occurrence point has been changed;

Fig. 23 is a flowchart showing the operation of a car navigation system comprising a shape data generation apparatus according to the mode;

Fig. 24 is a flowchart for explaining a method for setting a feature node according to the mode;

Fig. 25 is a flowchart showing the operation of the decoder of a car navigation system comprising the shape data generation apparatus according to the mode; and

Fig. 26 is an explanatory diagram showing an example (a) wherein desired results are not obtained through map matching and an example (b) wherein desired results are obtained.

In the drawings, reference numerals 100a and 100b denote transmission apparatuses; 101, a digital map database; 103, an event information database; 105, a shape data expression information generator; 107, a shape data expression information storage unit; 109, a data transmitter; 151, a shape data compression/ transformation processor; 153, a compressed shape data expression information storage unit; 155, a compressed shape data decoder and event relative location corrector; 200a and 200b, reception apparatuses; 201, a data receiver; 203, a shape data expression information storage unit; 205, a map matching unit; 207, a digital map database; 209 and 209', event relative location correctors; 211, a display unit; 251, a compressed shape data decoder; 253, a decoded shape data expression information storage unit; 100, an encoder; 1101, a digital map database; 1103, an event information database; 1105, a shape data expression information generator; 1106, a feature node setting unit; 1107, a shape data expression information storage unit; 1109, a data transmitter; 200, a decoder; 1201, a data receiver; 1203, a shape data expression information storage unit; 1205, a map matching unit; 1207, a digital map database; 1209, an event relative location corrector; and 1211, a display unit.

<Best Modes for Carrying Out the Invention>

A relative location data correction apparatus, a relative location data correction method and a relative location data correction program according to the present invention will now be described in detail, in the order [First Embodiment], [Second Embodiment] and [Third Embodiment], while referring to the drawings. Further, a shape data generation apparatus, a shape data generation method and a shape data generation program according to the present invention will be described in detail, as a [Fourth Embodiment], while referring to the drawings.

The relative location data correction apparatus explained in the first to third embodiments is employed by a car navigation system used, for example, for vehicles. The car navigation system comprises a transmission apparatus such as a center system, a reception apparatus such as the main body of the car navigation system, and a communication system through which the transmission apparatus can transmit data to the reception apparatus. Different map databases are employed by the transmission apparatus and the reception apparatus.

For the first to the third embodiments, the relative location data correction apparatus and the relative data correction method will be described in detail, and since the relative location data correction program of the invention is a program for providing the relative location data correction method, a description of this program is included in the following explanation.

[First Embodiment]

Fig. 1 is a block diagram showing a car navigation system comprising a relative location data correction apparatus according to a first embodiment of the present invention. As is shown in Fig. 1, the relative location data correction apparatus of this embodiment comprises a transmission apparatus 100a and a reception apparatus 200a. The transmission apparatus 100a includes: a digital map database 101, which corresponds to the first map database in claim 1; an event information database 103; a shape data expression information generator 105, which corresponds to the location expression information conversion means and the first total length determination means; a shape data expression information storage unit 107; and a data transmitter 109. The reception apparatus 200a includes: a data receiver 201; a shape data expression information storage unit 203; a map matching unit 205; a digital map database 207, which corresponds to the second map database; an event relative location correction unit 209, which corresponds to the second total length determination means, the first relative location correction means and the event occurrence point identification means; and a display unit 211.

The transmission apparatus 100a transmits to the reception apparatus 200a event information concerning a traffic accident or traffic congestion that is prepared based on the digital map database 101, and based on the event information received from the transmission apparatus 100a, the reception apparatus 200a displays an event occurrence point on a map provided by the digital map database 207. Before displaying the event occurrence point, the reception apparatus 200a corrects the location of the event occurrence point.

An explanation will now be given for the individual components of the transmission apparatus 100a and the reception apparatus 200a that constitute the relative location data correction apparatus of this embodiment.

First, map data are stored in the digital map database 101 of the transmission apparatus 100a and the digital map database 207 of the reception apparatus 200a; specifically, nodes and links that can represent road sections are stored, as is shown in Fig. 17. A node is a point, such as an intersection or a border, that is used as a criterion for a map, and the location of the node is represented by the latitude and the longitude. A relationship with another node that is to be linked in order to represent a road, for example, is also stored as information concerning the node. A link is a line connecting nodes. When a link is a curved line, an interpolation point, the location of which is represented by the latitude and the longitude, as is the node, is designated in the link (in an explanation given for a shape data, an interpolation point is also represented as a node, and a line segment connecting the nodes is represented as a link).

Since the digital map databases 101 and 207 in this embodiment are prepared using different preparation methods, or by different organizations, such as companies, these databases are not completely the same. In the following explanation, it is assumed that the digital map database 101 is provided by a company A and the digital map database 207 is provided by a company B.

There is a case wherein the number of nodes used to represent the same road section differs between the digital map database 101 of company A and the digital map database 207 of company B. For example, as is shown in Fig. 15, for a specific road section, seven nodes are designated based on the digital map database 101 for company A, while only four nodes are designated based on the digital map database 207 for company B. The difference in the number of nodes affects the calculation of the total length of a road section, and accordingly, affects the identification of an event occurrence point. Therefore, in this embodiment, a correction process is performed to designate the event occurrence point. The identification of the event occurrence point will be described later.

Furthermore, in this embodiment, in order to display an event occurrence point, such as for a traffic accident or traffic congestion, on a map using the reception apparatus 200a, the shape data expression information generator 105, as in the conventional case, employs map data stored in the digital map database 101 of the transmission apparatus 100a to generate a "shape data" that, for example, represents a predetermined road section. As is shown in Fig. 2(a), the shape data includes data, such as a shape data array identification number, a data type for a vector such as a road vector, the total length of a shape data, the total number of nodes forming the shape data and the node numbers, and the absolute coordinates (the latitude and the longitude) or the relative coordinates for each of the nodes.

Two types of nodes constitute a shape data. One node type is a "base point node", represented by an absolute location (for example, an absolute latitude and longitude and an absolute bearing), and several base point nodes are provided in a road section. The other node type is a "relative node", represented by a location relative to an adjacent node (for example, relative coordinates, or a declination and a relative distance). The total length of a shape data is obtained by adding the distances between the links that form the shape data. An actual value defined in advance may be employed, if available.

An example shape data represented by a plurality of nodes is shown in Fig. 13(a). As is shown in Fig. 13(a), the shape data is formed of a base point node 11 and relative nodes 13, and the base point node 11 is designated as the starting point, such as an intersection, for the shape data, and the relative nodes 13 are designated downstream along a road. The base point node is not always designated as the starting point for the shape data, as in the example in Fig. 13(a), and may be designated as the terminal end or the middle. Further, the base point node is not always located upstream of the relative nodes, and may be located downstream.

The event information database 103 of the transmission apparatus 100a will now be described. The event information database is a database wherein information is stored for a point whereat an event, such as a traffic accident or traffic congestion, has occurred. The event information includes event contents, for example, such as that for a traffic accident or traffic congestion, and an event occurrence point that is represented by the latitude and the longitude, or by a conventional location data identifier.

The shape data expression information generator 105 of the transmission apparatus 100a will now be described. The shape data expression information generator 105 obtains the event information from the event information database 103, and obtains map data for the periphery of the event occurrence point indicated by the event information. Then, the shape data expression information generator 105 generates a shape data that includes the event occurrence point, and converts the event occurrence point into a location De, relative to the base point node in the shape data. In Fig. 2(b) is shown an example data structure for event information converted by the shape data expression information generator 105. As is shown in Fig. 2(b), the converted event information indicates that the event occurrence point is some hundreds of meters from a specified base point node, and includes data, for example, for a "reference shape data array number" that indicates a road section to which the event occurrence point, an event type such as the suspension of vehicle traffic or traffic congestion, and the relative location of an event.

Based on the map data obtained from the digital map database 101, the shape data expression information generator 105 calculates the total length Le of the shape data (road section) to which the event occurrence point belongs to. The total length Le is obtained by adding the distances ($\sqrt{(\Delta x^2 + \Delta y^2)}$) between nodes, and is added to shape data shown in Fig. 14(a). In Fig. 2(a) is shown an example data structure for the shape data to which the total length Le is added.

The event information and the shape data thus obtained are stored as "shape data expression information" in the shape data expression information storage unit 107, and are transmitted, as needed, to the data transmitter 109. The data transmitter 109 converts the shape data expression information into a transmission form (transmission data), and transmits the data to the reception apparatus 200a.

The individual components of the reception apparatus 200a will now be described.

First, the data receiver 201 receives shape data expression information, from the transmission apparatus 100a, and stores the shape data expression information in the shape data expression information storage unit 203. Upon receiving a request from the map matching unit 205 and the event relative location correction unit 209, the shape data expression information stored in the shape data expression information storage unit 203 is transmitted to these units.

The map matching unit 205 of the reception apparatus 200a performs map matching by employing the shape data, included in the shape data expression information, and the digital map database 207 provided by company B, and identifies a road section (hereinafter referred to as a "target road section") represented by the shape data. The map data in the digital map database 207 corresponding to the designated target road section is transmitted by the map matching unit 205 to the event relative location correction unit 209.

Further in the reception apparatus 200a, based on the shape data included in the shape data expression information and the map data in the digital map database 207 obtained through the map matching unit 205, the event relative location correction unit 209 calculates the total length Ld of the target road section identified by the map matching unit 205. As well as the total length Le obtained by the shape data expression information generator 105 of the transmission apparatus 100a, the total length Ld is obtained by adding the distances between nodes, i.e., by adding the lengths ($\sqrt{(\Delta x^2 + \Delta y^2)}$) of links.

The event relative location correction unit 209 employs the total length Ld for the designated target road section and the total length Le for the target road section obtained by the shape data expression information generator 105 of the transmission apparatus 100a, and corrects the relative location De indicated by the event information that is included the shape data expression information. A corrected relative location Dd is thus obtained. It should be noted that the following expression (1) is employed to calculate the corrected relative location Dd.

$$Dd = De \times (Ld/Le) \quad (1)$$

The display unit 211 of the reception apparatus 200a displays a map provided by company B based on the map data obtained from the digital map database 207, and displays on the map a road section indicated by the shape data and an event occurrence point in accordance with the corrected relative location Dd.

The operation (relative location data correction method) of the car navigation system comprising the relative location correction apparatus according to the first embodiment will now be described while referring to Fig. 3. Fig. 3 is a flowchart showing the operation of the car navigation system comprising the relative location data correction apparatus according to the first embodiment.

First, the shape data expression information generator 105 of the transmission apparatus 100a obtains event information from the event information database 103 (step S101). Then, the shape data expression information generator 105 obtains from the digital map database 101 map data for the periphery of an event occurrence point represented by the event information obtained at step s101 (step S103). The shape data expression information generator 105 converts the event occurrence point into the relative location De in the shape data (step S105). Sequentially, the shape data expression information generator 105 calculates the total length Le of the shape data (road section) to which the event occurrence point belongs (step S107).

The total length Le obtained at step s107 is'added to the shape data, and the resultant shape data and the event information, which includes the relative location De obtained at step S105, are stored in the shape data expression information storage unit 107, and the shape data expression information is converted into transmission data (step S109). Following this, the obtained transmission data is transmitted to the reception apparatus 200a (step S111).

Next, the data receiver 201 of the reception apparatus 200a receives the shape data expression information from the transmission apparatus 100a (step S151). The map matching unit 205 performs map matching by using the shape data, included in the shape data expression information, and the digital map database 207, and identifies a target road section (step S153). Then, the event relative location correction unit 209 calculates the total length Ld of the target road section designated at step S153 (step S155).

The event relative location correction unit 209 corrects the relative location De in accordance with expression (1), described above, by employing the total length Ld of the target road section designated at step S155 and the total length Le of the target road section obtained at step S107 (step S157). Then, the event relative location correction unit 209 employs the corrected relative location Dd to identify the event occurrence point on the map provided by the digital map database 207 (step S159). Finally, the display unit 211 displays a map based on the shape data obtained from the digital map database 207, and displays on the map the event occurrence point based on the corrected relative location Dd (step S161).

As is described above, according to the car navigation system comprising the relative location data correction apparatus of this embodiment, even when the digital map database used by the transmission apparatus 100a differs from the digital map database used by the reception apparatus 200a, the relative location of the event occurrence point can be corrected based on the total lengths of the same road section obtained in accordance with the two digital map databases. Therefore, the reception apparatus 200a can accurately display the event occurrence point without shifting the location.

In this embodiment, the total length Le of the road section for the digital map database 101 is calculated by the shape data expression information generator 105 of the transmission apparatus 100a. As a different mode, the event relative location correction unit 209 of the reception apparatus 200a may calculate the total length Le. In this case, since the total length Le is not added to the shape data, as an obtained effect, the amount of data for the shape data expression information can be reduced. Fig. 4 is a flowchart showing the operation of a car navigation system comprising the relative location data correction apparatus for this mode.

Furthermore, in this embodiment, the relative coordinates and the relative bearings are employed as information representing the locations of each of the relative nodes. As another method, the location of the relative node may be represented by the distance from a node located upstream and the declination from the node.

[Second Embodiment]

Fig. 5 is a block diagram showing a car navigation system comprising a relative location data correction apparatus according to a second embodiment of the present invention. In Fig. 5, the same reference numerals are provided for portions overlapping those in Fig. 1 (first embodiment), and no explanation for them will be given. As is shown in Fig. 5, the relative location data correction apparatus for the second embodiment comprises a transmission apparatus 100b and a reception apparatus 200b.

In addition to the components of the transmission apparatus 100a in the first embodiment, the transmission apparatus 100b in this embodiment includes: a shape data compression/transformation processor 151, which corresponds to the shape data compression/transformation means in the claims; a compressed shape data expression information storage unit 153; a compressed shape data decoder 155, which corresponds to the first shape data decoding means; and an event relative location correction unit 157, which corresponds to the third total length determination means and the second relative location correction means. Further, in addition to the components of the reception apparatus 200a in the first embodiment, the reception apparatus 200b in this embodiment includes: a compressed shape data decoder 251, which corresponds to the second shape data decoding means; and a decoded shape data expression information storage unit 253.

In this embodiment, the irreversible compression process, or the shape transformation process for preventing erroneous matching has been performed for the shape data expression information transmitted by the transmission apparatus 100b. An explanation will now be given for the individual components that are newly added for the transmission apparatus 100b and the reception apparatus 200b that together constitute the relative location data correction apparatus in this embodiment.

First, the shape data compression/transformation processor 151 of the transmission apparatus 100b performs the irreversible compression process, or the shape transformation process to prevent erroneous matching, for shape data that a shape data expression information generator 105 has obtained from a digital map database 101, and stores the resultant shape data in the compressed shape data expression information storage unit 153. The compressed shape data decoder 155 then decodes the shape data compressed or transformed by the shape data compression/transformation processor 151.

The event relative location data correction unit 157 of the transmission apparatus 100b calculates a total length Le' for each road section represented by the shape data that is decoded by the compressed shape data decoder 155, and corrects a relative location De indicated by event information that is obtained by the shape data expression information generator 105. As a result, a corrected relative location De' is obtained. As well as the total length Le, the total length Le' is obtained by adding the distances ($\sqrt{(\Delta x^2 + \Delta y^2)}$) between nodes. It should be noted that the following expression (2) is employed to obtain the corrected relative location De'.

$$De' = De \times (Le'/Le) \qquad (2)$$

The compressed shape data, which is stored in the compressed shape data expression information storage unit 153, and event information, which includes the corrected relative location De' obtained by the event relative location correction unit 157, are stored together as "shape data expression information" in a shape data expression information storage unit 107 of the transmission apparatus 100b. In Fig. 6 is shown an example data structure of the shape data expression information for this embodiment. In Fig. 6, (a) shows an example data structure for compressed shape data and (b) shows an example data structure for event information converted by the shape data expression information generator.

The compressed shape data decoder 251 of the reception apparatus 200b decodes the shape data expression information received from the transmission apparatus 100b, and transmits the decoded data to a map matching unit 205 and the decoded shape data expression information storage unit 253. The map matching unit 205 performs the map matching process in the same manner as in the reception apparatus 200a of the first embodiment, while an event relative location correction unit 209' of the reception apparatus 200b of this embodiment performs a slightly different process for the event relative location correction unit 209 of the reception apparatus 200a in the first embodiment.

First, in the same manner as in the different mode for the first embodiment, the event relative location correction unit 209' calculates the total length Le' of each road section represented by the decoded shape data. The calculation process is performed in the same manner as is the process that uses the event relative location correction unit 157 of the transmission apparatus 100b to calculate the total length Le'. For the correction of the relative location De' included in the event information, the relative location De' is corrected by using the total length Ld of the target road section, which is obtained based on the shape data stored in the digital map database 207, and the total length Le' of the target road section. As a result, the corrected relative location Dd is obtained. In this embodiment, it should be noted that the following expression (3) is employed to calculate the corrected relative location Dd.

$$Dd = De' \times (Ld/Le') \qquad (3).$$

While referring to Fig. 7, an explanation will now be given for the operation (relative location data correction method) of the car navigation system comprising the relative location data correction apparatus according to the second embodiment. Fig. 7 is a flowchart showing the operation of the car navigation system comprising the relative location data correction apparatus according to the second embodiment. The same symbols are provided for steps that overlap those in the flowchart (first embodiment) in Fig. 3.

First, the shape data expression information generator 105 of the transmission apparatus 100b obtains event information from the event information database 103 (step S101). Then, the shape data expression information generator 105 obtains, from the digital map database 101, shape data for the periphery of an event occurrence point that is indicated by the event information obtained at step S101 (step S103). Sequentially, the shape data expression information generator 105 converts the event occurrence point into the relative location De in the shape data (step S105). Following this, the shape data expression information generator 105 calculates the total length Le for each road section indicated by the shape data (step S107).

Next, the shape data compression/transformation processor 151 performs, for the shape data obtained at step S103, the irreversible compression process or the shape transformation process for preventing erroneous matching (step S201). Then, the compressed shape data decoder 155 temporarily decodes the shape data that has been compressed or transformed, and the event relative location correction unit 157 calculates the total length Le' for each road section indicated by the decoded shape data (step S203). Following this, the relative location De that is indicated by the event information obtained by the shape data expression information generator 105 is corrected, so that the corrected relative location De' is obtained (step S255).

The shape data, which was obtained at step S103 and was compressed or transformed at step S201, and the event information, which includes the corrected relative location De' obtained at step S205, are stored in the shape data expression information storage unit 107. Thereafter, the shape data expression information is converted into transmission data (step S109). Then, the transmission data is transmitted to the reception apparatus 200a (step S111).

The data receiver 201 of the reception apparatus 200b receives the shape data expression information from the transmission apparatus 100b (step S151). The shape data expression information is decoded (step S251), and the total length Le' for each road section, which is indicated by the shape data included in the decoded shape data expression information, is calculated (step S253). Following this, the map matching unit 205 performs map matching by using the shape data and the digital map database 207, and identifies a target road section (step S153). Sequentially, the event relative location correction unit 209' calculates the total length Ld of the target road section designated at step S153 (step S155).

Next, based on the total length Ld of the target road section designated at step S155 and the total length Le' of the target road section obtained at step S253, the event relative location correction unit 209' corrects the relative location De' using the expression (3) described above (step S157). Then, based on the corrected relative location Dd, the event relative location correction unit 209' identifies an event occurrence point on the map provided by the digital map database 207 (step S159). Finally, the display unit 11 displays a map based on the shape data obtained from the digital map database 207, and displays an event occurrence point on the map based on the corrected relative location Dd (step S161).

As is described above, according to the car navigation system comprising the relative location data correction apparatus of this embodiment, even when the total length of a road section is changed through the irreversible compression process or the shape transformation process performed for the shape data that is received from the transmission apparatus 100b, the total length of the road section after being compressed or transformed need only be designated in advance. In this case, the relative location De can be corrected in accordance with the total length, and the corrected location can be employed as a relative location for event information. Therefore, even when the total length of a road section is changed by decoding the shape data that has been compressed or transformed, the correction process as performed for the first embodiment need only be further performed for the corrected relative location De'. As a result, the event occurrence point can be correctly displayed.

In this embodiment, the total length Le' of the decoded shape data (road section) is not included in the shape data included in the shape data expression information that is transmitted by the transmission apparatus 100b, and the event relative location correction unit 209' of the reception apparatus 200b calculates the total length Le'. However, as another mode, the total length Le' may be included in the shape data as in the first embodiment.

[Third Embodiment]

The configuration of a car navigation system comprising a relative location data correction apparatus according to a third embodiment is the same as that for the second embodiment. However, in this embodiment, when a shape data expression information generator 105 converts an event occurrence point into a relative location De in a shape data, the event occurrence point is represented as a relative location viewed from a feature point (hereinafter referred to as a "feature node"), such as an intersection curved at a specific angle and located between the base point node at the starting point and a relative node at the terminal end. For example, the event occurrence point is represented as a point some hundreds of meters from the feature node. In Fig. 8(b) is shown an example data structure for event information converted by the shape data expression information generator 105. The example data structure for the shape data in Fig. 8 (a) is the same as that in Fig. 6 (a) for the second embodiment.

Furthermore, in this embodiment, at least two feature nodes (Pm and Pn) are designated in a road section, as is shown in Fig. 9. When an event occurrence point is located between two feature nodes, the shape data expression information generator 105 of a transmission apparatus 100b and an event relative location correction unit 157, or an event relative location correction unit 209' of a reception apparatus 200b, calculate the total length between the two feature nodes. When two feature nodes are designated, a map matching unit 205 of the reception apparatus 200b performs map matching based on the feature nodes.

Fig. 10 is a flowchart showing the operation (relative location data correction method) of the car navigation system comprising the relative location data correction apparatus according to the third embodiment. As is shown in Fig. 10, the relative location of an event occurrence point is represented by using the feature nodes, and the total length between the two feature nodes, instead of the road section, is obtained in order to correct the relative location.

The setting of the above explained feature nodes will now be described. First, the typical points such as feature nodes can be intersections, the toll gates for expressways, locations where the road type changes, the vertexes of hairpin curves and the borders of prefectures. To designate these points as feature nodes, example shape data attribute information shown in Fig. 11 is added to the shape data expression information. As is shown in Fig. 11, the shape data attribute information includes a shape data identification number indicating a road section, a feature node number, a node type code and a node number.

The feature node number is a number incremented beginning with "1", and the node type code is information indicating, for example, no feature, an intersection node (intersection of highways), an intersection node (intersection of alleys), a 30° curve, a 60° curve, a 90 ° curve, a greater than a 90° curve (the vertex of a hairpin curve), a point whereat a transfer road changes to a trunk line, a point whereat a trunk line changes to a transfer road, a point whereat a toll-free road changes to a toll road, a point whereat a toll road changes to a toll-free road, and a border between prefectures. When a feature node is designated at a point, such as at a 30 ° curve or a 60 ° curve, where a road is curved, the cumulative angle for each unit length must be employed for the designation. That is, an angle difference between contiguous roads (links) in a predetermined area is 30 ° or 60 °. The node type node used for a curve at a large angle can be eliminated so long as a rule, used in common, is determined in advance by the transmission apparatus 100b and the reception apparatus 200b.

When the shape data attribute information is designated, and when the transmission apparatus 100b transmits the shape data expression information, including the shape data attribute information, the map matching unit 205 of the reception apparatus 200b performs map matching, while taking into account the shape data attribute information, and designates a target road section. Fig. 12 is a flowchart showing the operation of the car navigation system comprising the relative location data correction apparatus according to the third embodiment when setting and transmitting the shape data attribute information.

As is described above, according to the car navigation system comprising the relative location data correction apparatus of this embodiment, the event occurrence point is represented by using a relative location for the feature node. When the distance from the feature node to the event occurrence point is compared with the distance from the base point node to the event occurrence point, the distance from the feature node to the event occurrence point is shorter. Therefore, a cumulative error that may be included in the distance is small, so that the event occurrence point can be accurately displayed.

Further, the total length between the two feature nodes is obtained in order to correct the relative location of the event occurrence point. Since the total length between the feature nodes is shorter than the total length of the road section, the cumulative error that may be included in the total length between the feature nodes is smaller than the cumulative error that may be included in the total length of the road section. When the cumulative error for the total length is small, a more accurate calculation can be performed to correct the relative location of the event occurrence point, and the corrected occurrence point can be exactly obtained. As a result, the event occurrence point can be correctly displayed.

The map matching unit 205 of the reception apparatus 200 performs map matching based on the two feature nodes. Therefore, even when the irreversible compression or the shape transformation process is performed for the shape data, when the resultant shape data has been transmitted by the transmission apparatus 100b, together with the shape data expression information, or when the distance between the feature nodes differs for the digital map database 101 of the transmission apparatus 100b and the digital map database 207 of the reception apparatus 200b, a road can be correctly identified.

[Fourth Embodiment]

One embodiment for a shape data generation apparatus according to the present invention will now be described in detail while referring to the drawings. The shape data generation apparatus of this embodiment is employed by a car navigation system used, for example, for a vehicle. The car navigation system comprises: an encoder such as a center system; a decoder such as the main body of the car navigation system; and a communication system through which the encoder can transmit data to the decoder. The encoder and the decoder employ different digital map databases.

A detailed explanation will be given for the shape data generation apparatus and the shape data generation method of the invention, and since a shape data generation program according to the present invention is a program for performing the shape data generation method, a description of this program is included in the following explanation for the shape data generation method.

Fig. 18 is a block diagram showing the car navigation system comprising the shape data generation apparatus according to this embodiment. As is shown in Fig. 18, the car navigation system of the embodiment comprises an encoder 100 and a decoder 200. The encoder 100 includes: a digital map database 1101, which corresponds to a map database in the claims; an event information database 1103; a shape data expression information generator 1105; a feature node setting unit 1106, which corresponds to the shape data generation apparatus in the claims; a shape data expression information storage unit 1107; and a data transmitter 1109. The decoder 200 includes: a data receiver 1201; a shape data expression information storage unit 1203; a map matching unit 1205; a digital map database 1207; an event relative location correction unit 1209, which corresponds to the second total length determination means; and a display unit 1211.

The encoder 100 transmits to the decoder 200 event information, such as that for a traffic accident or traffic congestion, that is prepared based on the digital map database 1101. The decoder 2300 employs the event information received from the encoder 100 to display an event occurrence point on a map provided by the digital map database 1207.

An explanation will now be given for the individual components of the encoder 100 and the decoder 200 that constitute the car navigation system of the embodiment.

First, an explanation will be given for the digital map database 1101 of the encoder 100 and the digital map database 1207 of the decoder 200. Map data is stored in the digital map databases 1101 and 1207, and specifically, nodes and links that can represent road sections are stored, as is shown in Fig. 17. A node is a point, such as an intersection or a border line, used as a criterion for a map, and the location of the node is represented by using latitude and longitude. Further, a relationship with another node to be linked to represent a road, for example, is also stored as information concerning the node. A link is a line for connecting nodes. It should be noted, however, that, when a link is a curve, an interpolation point, the location of which, like the node, is represented by latitude and longitude, is designated along the link (in the following explanation for a shape data, the interpolation point is also referred to as a node, and a line segment between the nodes is defined as a link).

Since the digital map databases 1101 and 1207 in this embodiment are prepared using different preparation methods, or by different organizations, such as companies, these databases are not completely the same. In the following explanation, it is assumed that the digital map database 1101 is provided by a company A and the digital map database 1207 is provided by a company B.

There is a case wherein the number of nodes used to represent the same road section differs between the digital map database 1101 of company A and the digital map database 1207 of company B. For example, as is shown in Fig. 16, for a specific road section, seven nodes are designated based on the digital map database 1101 for company A, while only four nodes are designated based on the digital map database 1207 for company B. The difference in the number of nodes affects the calculation of the total length of a road section, and accordingly, affects the identification of an event occurrence point.

Furthermore, in this embodiment, in order to display an event occurrence point, such as for a traffic accident or traffic congestion, on a map using the decoder 200, the shape data expression information generator 1105, as in the conventional case, employs map data stored in the digital map database 1101 of the encoder 100 to generate a "shape data" that, for example, represents a predetermined road section. As is shown in Fig. 19(a), the shape data includes data, such as a shape data array identification number, a data type for a vector such as a road vector, the total length of a shape data, the total number of nodes forming the shape data and the node numbers, and the absolute coordinates (the latitude and the longitude) or the relative coordinates for each of the nodes.

Two types of nodes constitute a shape data. One node type is a "base point node", represented by an absolute location (for example, an absolute latitude and longitude and an absolute bearing), and several base point nodes are provided in a road section. The other node type is a "relative node", represented by a location relative to an adjacent node (for example, relative coordinates, or a declination and a relative distance). The total length of a shape data is obtained by adding the distances between the links that form the shape data. An actual value defined in advance may be employed, if available.

An example shape data represented by a plurality of nodes is shown in Fig. 13(a). As is shown in Fig. 13 (a) , the shape data is formed of a base point node 11 and relative nodes 13, and the base point node 11 is designated as the starting point, such as an intersection, for the shape data, and the relative nodes 13 are designated downstream along a road. The base point node is not always designated as the starting point for the shape data, as in the example in Fig. 13(a), and may be designated as the terminal end or the middle. Further, the base point node is not always located upstream of the relative nodes, and may be located downstream.

The event information database 1103 of the encoder 100 will now be described. The event information database is a database wherein information is stored for a point whereat an event, such as a traffic accident or traffic congestion, has occurred. The event information includes event contents, for example, such as that for a traffic accident or traffic congestion, and an event occurrence point that is represented by the latitude and the longitude, or by a conventional location data identifier.

The shape data expression information generator 1105 of the encoder 100 will now be described. The shape data expression information generator 1105 obtains the event information from the event information database 1103, and obtains map data for the periphery of the event occurrence point indicated by the event information. Then, the shape data expression information generator 1105 generates a shape data that includes the event occurrence point, and converts the event occurrence point into a location relative to the base point node in the shape data. In Fig. 19(b) is shown an example data structure for event information converted by the shape data expression information generator 1105. As is shown in Fig. 19(b), the converted event information indicates that the event occurrence point is some hundreds of meters from a specified base point node, and includes data, for example, for a "reference shape data array number" that indicates a road section to which the event occurrence point, an event type such as the suspension of vehicle traffic or traffic congestion, and the relative location of an event.

The feature node setting unit 1106 of the encoder 100 will now be described. The feature node setting unit 1106 designates, as a "feature node", a point that is located along or in the periphery of a road section represented by a shape data, generated by the shape data expression information generation unit 1105, that satisfies a predetermined condition. A typical point that serves as a feature node is an "intersection", location of which, for map matching, is identified comparatively easily. For example, as is shown in Fig. 20(a), for a shape data

wherein a specific intersection is designated as a base point node 21 and a plurality of relative nodes 23 are designated downstream along a road, the feature node setting unit 1106 designates, as feature nodes, the starting point and the end point of the shape data, and intersections between these points, or intersections near the starting point and the end point. Further, the feature node setting unit 1106 calculates a distance between adjacent feature nodes thus designated. The setting of the other feature nodes will be described later.

When the feature node setting unit 1106 has designated as feature nodes the above described points in the road section represented by the shape data, the feature node setting unit 1106 generates the feature node information shown in Fig. 19(c), for example. As is shown in Fig. 19(c), the feature node information includes a shape data identification number for identifying a shape data, the node number of a feature node and the distance between adjacent feature nodes. The feature node information may be included in the shape data. When a feature can only be expressed by a shape, e.g., when a shape data is bent for a curve having a large curvature or at an intersection, the feature node information may be omitted.

When the setting of the feature nodes has been completed, the feature node setting unit 1106 alters, to an expression for a relative location for a feature node, an expression for the relative location of an event occurrence point that is indicted by event information generated by the shape data expression information generator 1105, i.e., an expression, such as some hundreds of meters from a specific base node point, for a relative location separated from the base point node. In Fig. 22 is shown example event information for which the expression of the relative location of the event occurrence point has been altered.

The event information and the shape data thus obtained are stored as "shape data expression information" in the shape data expression information storage unit 1107, and are transmitted, as needed, to the data transmitter 1109. The data transmitter 1109 converts the shape data expression information into a transmission form (transmission data), and transmits the data to the decoder 200.

The individual components of the decoder 200 will now be described.

First, the data receiver 1201 receives shape data expression information, from the encoder 100, and stores the shape data expression information in the shape data expression information storage unit 1203. Upon receiving a request from the map matching unit 1205 and the event relative location correction unit 1209, the shape data expression information stored in the shape data expression information storage unit 1203 is transmitted to these units.

The map matching unit 1205 of the decoder 200 performs map matching by employing the shape data and feature node information (as is described above, the feature node information is not always required especially when a shape data is bent at a curve having a large curvature or an intersection), included in the shape data expression information, and the digital map database 1207 provided by company B, and identifies a road section (hereinafter referred to as a "target road section") represented by the shape data. The map data in the digital map database 1207 corresponding to the designated target road section is transmitted by the map matching unit 1205 to the event relative location correction unit 1209.

Further in the decoder 200, based on the feature node information included in the shape data expression information and the map data in the digital map database 1207 obtained through the map matching unit 1205, the event relative location correction unit 1209 corrects the location of the event occurrence point, indicated by the event information, relative to the feature node. For this correction, the distance L1 between adjacent feature nodes, indicated by the feature node information, and the distance L2 between the feature nodes, obtained by calculation based on the map data provided by the digital map database 1207, are employed to correct the relative location De included in the event information. A corrected relative location Dd is thus obtained. It should be noted that the following expression (4) is employed to calculate the corrected relative location Dd.

$$Dd = De \times (L1/L2) \quad (4)$$

The display unit 1211 of the decoder 200 displays a map provided by company B based on the map data obtained from the digital map database 1207, and displays on the map a road section indicated by the shape data and an event occurrence point in accordance with the corrected relative location Dd. The event occurrence point is displayed based on the corrected relative location Dd from the feature node.

The individual components of the encoder 100 and the decoder 200 have been explained. The feature node setting unit 1106 of the encoder 100 will now be described in detail.

As is described above, the feature node setting unit 1106 designates, as feature nodes, points such as intersections that are located along or in the periphery of a road section represented by a shape data, and the locations of which are comparatively easily identified. In addition to the intersection, a feature node can be designated as a toll gate, a point whereat a road type is changed, the vertex of a hairpin curve, or a border between prefectures. When a feature node is designated at a point where a road is curved at an angle of 30 ° or 60 °, for example, the cumulative angle for each unit length must be examined. That is, the angle difference (absolute declination value) between continuous roads (links) in a predetermined area is 30° or 60° in this case.

There are roughly two cases in which feature nodes are set: a case wherein feature nodes are set at the starting point and the end point of a shape data, and at intersections near these points, and a case wherein feature nodes are set at intersections along a shape data. An example of the first case is shown in Fig. 20, and an example of the second case is shown in Fig. 21.

While referring to Fig. 20, a detailed explanation will be given for the case wherein feature nodes are set at the starting point and the end point of a shape data, and at intersections near these points. First, for a shape data indicated by a solid line in Fig. 20(a), a check is performed to determine whether points available as feature nodes are present within a predetermined distance of the nodes located at both ends. In the shape data in Fig. 20(a), since a base point node 21 at the start point ###is an intersection, the base point node 21 is designated as a "base point node 25 serving also as a feature node". Furthermore, since a relative node 23 designated at the end point is not an intersection, a check is performed to determine whether there is, for example, an intersection (a point such that the absolute declination value between continuous links in a predetermined area is a predetermined value or greater) within a predetermined distance downstream from the end point. According to the example shown in Fig. 20(a), since an intersection is present ahead of the end point, this intersection is designated as a feature node 27 as is shown in Fig. 20(b), and the feature node 27 is defined as the end point of the shape data. Therefore, the end point of the resultant shape data is moved forward compared with the initial shape data, and the feature nodes are designated near the start point and the end point.

While referring to Fig. 21, a detailed explanation will be given for the case of setting feature nodes at intersections along a shape data. First, for a shape data indicated by a solid line in Fig. 21(a), a point such as an intersection is selected, which is present within a predetermined distance downstream from a node at a start point (a base point node 25 serving also as a feature node), and is defined as a feature node 29a. It should be noted that the predetermined distance is, for example, 1 km to 2 km. Sequentially, a point such as an intersection is selected, which is present within the same predetermined distance from the feature node 29a, and is defined as a feature node 29b. In this manner, feature nodes are designated downstream from the obtained feature node. It should be noted that a point that enables a right turn or left turn to a road intersecting the shape data, or that enables a U turn or a detour is selected as a feature node. In Fig. 21(b), a point that enables a U turn is selected as a feature node.

In Fig. 21 (c) is shown a shape data obtained by setting feature nodes along the shape data shown in Fig. 21(a). In the above explanation, feature nodes are selected based on a distance from a node designated at the start point of the shape data. However, feature nodes may be selected based on a distance from a node designated at the end point. In this case, the selection of feature nodes is performed in the upstream direction.

For the shape data where the feature nodes are thus designated, the feature node setting unit 1106 searches for the feature nodes, and provides node numbers for the individual feature nodes. Then, the feature node setting unit 1106 identifies a feature node nearest the event occurrence point indicated by event information, and changes, to a relative location for this feature node, the relative location of an event that is represented by using a distance from the base point node included in the event information. Further, the feature node setting unit 1106 calculates a distance between adjacent feature nodes that sandwich the event occurrence point, and generates feature node information that is formed of the node numbers of the feature nodes and the distance between the adjacent feature nodes. Attribute information indicating the attributes of the individual feature nodes may be generated.

The operation of the car navigation system comprising the shape data generation apparatus of this embodiment will now be described while referring to Figs. 23, 24 and 25. Fig. 23 is a flowchart showing the operation of the encoder of the car navigation system comprising the shape data generation apparatus for this embodiment. Fig. 24 is a flowchart for explaining a feature node setting method according to the embodiment. Fig. 25 is a flowchart showing the operation of the decoder of the car navigation system comprising the shape data generation apparatus for this embodiment.

First, the shape data expression information generator 1105 of the encoder 100 obtains event information from the event information database 1103 (step S1010). Sequentially, the shape data expression information generator 1105 obtains, from the digital map database 1101, map data for the periphery of an event occurrence point that is indicated by the event information obtained at step S1010, and generates a shape data (step S1030). Then, the feature node setting unit 1106 designates, as feature nodes, points such as intersections that are present in a road section represented by the shape data, and provides node numbers for the individual feature nodes (step S1050). The process at step S1050 will be described in detail later.

Following this, the feature node setting unit 1106 changes the shape data based on the feature nodes designated at step S1050 (step S1070). Then, the feature node setting unit 1106 identifies a feature node nearest the event occurrence point indicated by the event information (step S1090), and changes the relative location of the event to a relative location for the closest feature node (step S1110). The feature node setting unit 1106 calculates a distance between the adjacent feature nodes that sandwich the event occurrence point (step S1130), and generates feature node information based on the results obtained at step S1050 and S1130 (step S1150). Thereafter, the feature node setting unit 1106 converts into transmission data shape data expression information that is composed of the changed shape data, the event information and the feature node information (step S1170), and transmits the transmission data to the reception apparatus 200a (step S1190).

While referring to Fig. 24, a detailed explanation will now be given for a subroutine at step S1050 for setting feature nodes. First, the feature node setting unit 1106 determines whether points, such as intersections, selectable as feature nodes are present within a predetermined distance of the starting point or the end point of the shape data (step S2010). When there is a point selectable as a feature node, program control is shifted to step S2070, while when there are no selectable points, program control advances to step S2030. At step S2030, the area outside the range of the shape data is examined along a road to find a point, such as an intersection, located within a predetermined distance. Then, a point such as an intersection, obtained at step S2030, is designated a feature node, and the shape data is changed so as to include the feature node (step S2050).

At step S2070, the distances between all the feature nodes of the shape data are calculated, and the maximum value is selected. Then, a check is performed to determine whether the maximum value for the distance between the feature nodes is a predetermined value or smaller (step S2090). When the maximum value is the predetermined value or smaller, program control is shifted to step S2150, or when the maximum value is greater than the predetermined value, program control advances to step S2110. At step 2110, a point such as an intersection is selected in the periphery at the middle point between the above feature nodes. Sequentially, the selected point is designated a feature node and the shape data is changed so as to include this feature node (step S2130). Program control thereafter returns to step S2070. On the other hand, at step S2150 all the feature nodes for the shape data are searched for and node numbers are provided for the individual feature nodes. Thereafter, the subroutine is terminated and program control advances to step S107 of the main routine.

Next, the data receiver 1201 of the decoder 200 receives shape data expression information from the encoder 100 (step S1510). The map matching unit 1205 then performs map matching by employing the shape data and the feature node information, which are included in the shape data expression information, and the digital map database 1207, and identifies a target road section (step S1530). The event relative location correction unit 1209 then calculates a distance L2 between the adjacent feature nodes (step S1550).

Then, based on a distance L1 between adjacent feature nodes indicated by the feature node information and the distance L2 obtained at step S1550, the event relative location correction unit 1209 corrects the relative location De, included in the event information, in accordance with expression (4), described above (step S1570). Following this, in accordance with the corrected relative location Dd, the event relative location correction unit 1209 identifies an event occurrence point on the map provided by the digital map database 1207 (step S1590). Thereafter, the display unit 1211 displays a map based on the shape data obtained from the digital map database 1207, and displays the event occurrence point on the map based on the corrected relative location Dd (step S1610). It should be noted that the corrected relative location Dd for the feature node is employed to display the event occurrence point.

As is described above, according to the car navigation system comprising the shape data generation apparatus of the embodiment, an event occurrence point indicated by the event information transmitted by the encoder 100 is expressed by using the relative location for the feature node nearest the event occurrence point. And the relative location for the feature node is employed for the display, by the decoder 200, of the event occurrence point. Since the distance between the event occurrence point and the feature node is shorter than the distance between the event occurrence point and the base point node, an error included in the relative location that represents the event occurrence point is reduced. Therefore, when the event occurrence point is displayed by the decoder 200, the occurrence of location shifting is prevented, or reduced.

Furthermore, in this embodiment, the decoder 200 employs not only the shape data but the feature node information to perform map matching, and as is described above, the feature nodes are designated at intersections, the locations of which are comparatively easily identified. Therefore, unlike the conventional case, erroneous matching or a matching shift does not occur, and correct map matching can be performed. For example, to perform map matching, as is shown in Fig. 26(b), for a shape data that represents a bent road section, feature nodes designated at bent points (intersections) need only be superimposed on bent points of map data provided by the digital map database 1207. As a result, desirable results can be obtained. Further, for a shape data where feature vectors are designated at the starting point and the end point, both ends of the shape data can be accurately matched.

The present invention has been explained in detail by referring to the specific embodiments. However, it will be obvious to one having ordinary skill in the art that the present invention can be variously modified or amended without departing from the spirit and the scope of the invention.

This application is based on Japanese Patent Applications No. 2002-91650, filed on March 28, 2002, and No. 2002-92210, filed on March 28, 2002, and the contents of these Japanese patent applications are included as references.

<Industrial Applicability>

As is described above, according to the relative location data correction apparatus, the relative location data correction method and the relative location data correction program of the present invention, even when different map databases are employed by a transmission apparatus and a reception apparatus, an event occurrence point can be exactly displayed. Further, according to the shape data generation apparatus, the shape data generation method and the shape data generation program of the invention, even when an apparatus performs map matching for a shape data by using a map database that differs from that used by the shape data generation apparatus, erroneous matching or a matching shift does not occur so long as feature nodes are designated in the shape data. Thus, accurate map matching can be performed. Furthermore, when an event occurrence point is displayed by an apparatus employing a map database that differs from that employed by the shape data generation apparatus, the occurrence of location shifting is prevented or reduced.

## Claims

**1.** A relative position data correction apparatus, for correcting a shift that occurs between different map databases for the location of a predetermined point that is relatively indicated, **characterized in that**:

relative position data for an event occurrence point, which is indicated based on a position relative to a node that is designated in a shape data obtained from a first map database, is corrected by using the total length of a shape data that is stored in said first map database and that said event occurrence point belongs to, and the total length of a shape data that is stored in a second database and that said event occurrence point belongs to.

**2.** The relative position data correction apparatus according to claim 1, **characterized in that**:

to correct said relative position data for said event occurrence point, the relative position data correction apparatus employs a ratio of said total length of said shape data that is stored in said first map database and that said event occurrence point belongs to, to said total length of said shape data that is stored in said second map database and that said event occurrence point belongs to.

**3.** The relative position data correction apparatus according to claim 1 or 2, **characterized in that** said apparatus comprises:

a transmission apparatus that includes

said first map database,

position expression conversion means for the conversion, based on a shape data that is obtained from said first map database and represents the periphery of said event occurrence point, of said event occurrence point into a relative location of a node designated in said shape data, and

first total length determination means for determining the total length of said shape data that is obtained from said first map database and that said event occurrence point belongs to,

wherein said transmission apparatus transmits said shape data for said periphery of said event occurrence point, including relative position data for said event occurrence point and said total length of said shape data determined by said first total length determination means; and

a reception apparatus that includes

said second map database,

second total length determination means for determining the total length of a shape data and that is obtained from said second map database and that said event occurrence point belongs to,

first relative position correction means for employing said total length determined by said first total length determination means and said total length determined by said second total length determination means to correct a relative location for said event occurrence point that has been obtained by said position expression correction means, and

event occurrence point specification means for specifying said event occurrence point, based on a relative location that has been corrected by said first relative position correction means, and said shape data obtained from said second map database.

**4.** The relative position data correction apparatus according to claim 1 or 2, **characterized in that** said apparatus comprises:

a transmission apparatus that includes

said first map database, and

position expression conversion means for the conversion, based on a shape data that is obtained from said first map database and represents the periphery of said event occurrence point, of said event occurrence point into a relative location of a node designated in said shape data,

wherein said transmission apparatus transmits relative position data for said event occurrence point and said shape data for said periphery of said event occurrence point, including said total length of said shape data determined by said first total length determination means; and

a reception apparatus that includes

first total length determination means for determining the total length of said shape data that is transmitted by said transmission apparatus and that said event occurrence point belongs to,

said second map database,

second total length determination means for determining the total length of a shape data that is obtained from said second map database and that said event occurrence point belongs to,

first relative position correction means for employing said total length determined by said first total length determination means and said total length determined by said second total length determination means to correct a relative location for said event occurrence point that has been obtained by said position expression correction means, and

event occurrence point specification means for specifying said event occurrence point, based on a relative location that has been corrected by said first relative position correction means, and said shape data obtained from said second map database.

**5.** The relative position data correction apparatus according to claim 3, **characterized in that** said transmission apparatus further includes:

shape data compression/transformation means for performing an irreversible compression process, or a shape transformation process, for a shape data obtained from said first map database;

first shape data decoding means for decoding said shape data, which has been processed by said shape data compression/transformation means, that said event occurrence point belongs to;

third total length determination means for determining the total length of said shape data, which has been decoded by said first shape data decoding means, that said event occurrence point belongs to; and

second relative position correction means for employing said total length determined by said first total length determination means and said total length determined by said third total length determination means to correct said relative location of said event occurrence point obtained by said position expression conversion means,

wherein said transmission apparatus transmits said relative location of said event occurrence point corrected by said second relative position correction means and said shape data, which is obtained by said shape data compression/transformation means through said irreversible compression process or said shape transformation process, that includes said total length of said shape data determined by said third total length determination means, and **in that** said reception apparatus further includes:

second shape data decoding means for decoding said shape data received from said transmission apparatus,

wherein said first relative position correction means employs said total length determined by said third total length determination means and said total length determined by said second total length determination means to correct said relative location of said event occurrence point that has been corrected by said second relative position correction means.

**6.** The relative position data correction apparatus according to claim 4, **characterized in that** said transmission apparatus further includes:

shape data compression/transformation means for performing an irreversible compression process, or a shape transformation process, for a shape data obtained from said first map database;

first shape data decoding means for decoding said shape data, which has been processed by said shape data compression/transformation means, that said event occurrence point belongs to;

third total length determination means for determining the total length of said shape data, which has been decoded by said first shape data decoding means, that said event occurrence point belongs to; and

second relative position correction means for employing said total length determined by said first total length determination means and said total length determined by said third total length determination means to correct said relative location of said event occurrence point obtained by said position expression conversion means,

wherein said transmission apparatus transmits said relative position of said event occurrence point corrected by said second relative position correction means and said shape data that is obtained by said shape data compression/transformation means through said irreversible compression process or said shape transformation process, and **in that** said reception apparatus further includes:

second shape data decoding means for decoding said shape data received from said transmission apparatus; and
third total length determination means for determining the total length of a shape data that is decoded by said second shape data decoding means and that said event occurrence point belongs to,

wherein said first relative position correction means employs said total length determined by said third total length determination means and said total length determined by said second total length determination means to correct said relative location of said event occurrence point that has been corrected by said second relative position correction means.

**7.** The relative position data correction apparatus according to one of claims 3 to 6, **characterized in that**:

said shape data has a feature node designated between nodes located at both terminal ends; and
said position expression conversion means converts an event occurrence point into a location relative to said feature node in said shape data.

**8.** The relative position data correction apparatus according to claim 7, **characterized in that**:

at least two feature nodes are designated in a shape data, and when an event occurrence point is located between said two feature nodes, said first, second and third total length determination means determine the total length of the distance between said two feature nodes.

**9.** The relative position data correction apparatus according to one of claims 3 to 8, **characterized in that**:

said first, second and third total length determination means determine said total length of said shape data through calculation or based on a value defined in advance.

**10.** The relative position data correction apparatus according to one of claims 7 to 9, **characterized in that**:

said transmission apparatus transmits shape data attribute information for identification and the types of said feature nodes designated in said shape data.

**11.** The relative position data correction apparatus according to one of claims 7 to 10, **characterized in that**:

each of said feature nodes is designated at a point whereat an angle difference in a predetermined area for a link constituting said shape data is equal to or greater than a predetermined angle.

**12.** A relative position data correction method, for correcting a shift that occurs between different map databases for the location of a predetermined point that is relatively indicated, **characterized in that**:

relative position data for an event occurrence point, which is indicated based on a position relative to a node that is designated in a shape data obtained from a first map database, is corrected by using the total length of a shape data that is stored in said first map database and that said event occurrence point belongs to, and the total length of a shape data that is stored in a second database and that said event occurrence point belongs to.

**13.** The relative position data correction method according to claim 12, **characterized in that**:

to correct said relative position data for said event occurrence point, a ratio of said total length of said shape data that is stored in said first map database and that said event occurrence point belongs to, to said total length of said shape data that is stored in said second map database and that said event occurrence point belongs to.

**14.** The relative position data correction method according to claim 12 or 13, **characterized in that** said method comprises:

a position expression conversion step of the conversion, based on a shape data that is obtained from said first map database and represents the periphery of said event occurrence point, of said event occurrence point into a relative position of a node designated in said shape data;

a first total length determination step of determining the total length of said shape data that is obtained from said first map database and that said event occurrence point belongs to;
a transmission step of transmitting relative position data for said event occurrence point and said shape data for said periphery of said event occurrence point, including said total length of said shape data determined at said first total length determination step;
a second total length determination step of determining the total length of a shape data and that is obtained from said second map database and that said event occurrence point belongs to; and
a first relative position correction step of employing said total length determined at said first total length determination step and said total length determined at said second total length determination step to correct a relative location for said event occurrence point that has been obtained at said position expression correction step.

**15.** The relative position data correction method according to claim 12 or 13, **characterized in that** said method comprises:

a position expression conversion step of the conversion, based on a shape data that is obtained from said first map database and represents the periphery of said event occurrence point, of said event occurrence point into a relative position of a node designated in said shape data;
a transmission step of transmitting relative position data for said event occurrence point and said shape data for said periphery of said event occurrence point;
a first total length determination step of determining the total length of said shape data that is transmitted at said transmission step and that said event occurrence point belongs to;
a second total length determination step of determining the total length of a shape data and that is obtained from said second map database and that said event occurrence point belongs to; and
a first relative position correction step of employing said total length determined at said first total length determination step and said total length determined at said second total length determination step to correct a relative location for said event occurrence point that has been obtained at said position expression correction step.

**16.** The relative position data correction method according to claim 14, **characterized in that** said method comprises:

a shape data compression/transformation step of performing an irreversible compression process, or a shape transformation process, for a shape data obtained from said first map database;
a first shape data decoding step of decoding said shape data, which has been processed by said shape data compression/transformation means, that said event occurrence point belongs to;
a third total length determination step of determining the total length of said shape data, which has been decoded at said first shape data decoding step, that said event occurrence point belongs to; and
a second relative position correction step of employing said total length determined at said first total length determination step and said total length determined at said third total length determination step to correct said relative location of said event occurrence point obtained at said position expression conversion step; and
a second shape data decoding step of decoding said shape data transmitted at said transmission step,
whereby, at said first relative position correction step, said total length determined at said third total length determination step and said total length determined at said second total length determination step are employed to correct said relative location of said event occurrence point that has been corrected at said second relative position correction step.

**17.** The relative position data correction method according to claim 15, **characterized in that** said method comprises:

a shape data compression/transformation step of performing an irreversible compression process, or a shape transformation process, for a shape data obtained from said first map database;
a first shape data decoding step of decoding said shape data, which has been processed by said shape data compression/transformation means, that said event occurrence point belongs to;
a third total length determination step of determining the total length of said shape data, which has been decoded at said first shape data decoding step, that said event occurrence point belongs to; and
a second relative position correction step of employing said total length determined at said first total length determination step and said total length determined at said third total length determination step to correct said relative location of said event occurrence point obtained at said position expression conversion step;
a second shape data decoding step of decoding said shape data transmitted at said transmission step; and
a third total length determination step of determining the total length of said shape data that is decoded at said second shape data decoding step and that said event occurrence point belongs,

whereby, at said first relative position correction step, said total length determined at said third total length determination step and said total length determined at said second total length determination step are employed to correct said relative location of said event occurrence point that has been corrected at said second relative position correction step.

**18.** The relative position data correction method according to one of claims 14 to 17, **characterized in that**:

said shape data has a feature node designated between nodes located at both terminal ends, and **in that**, at said position expression conversion step, an event occurrence point is converted into a location relative to said feature node in said shape data.

**19.** The relative position data correction method according to claim 18, **characterized in that**:

at least two feature nodes are designated in a shape data, and when an event occurrence point is located between said two feature nodes, the total length of the distance between said two feature nodes is determined at said first, second and third total length determination step.

**20.** The relative position data correction method according to one of claims 14 to 19, **characterized in that**:

at said first, second and third total length determination step, said total length of said shape data is determined through calculation or based on a value defined in advance.

**21.** The relative position data correction method according to one of claims 18 to 20, **characterized in that**:

shape data attribute information for identification and the types of said feature nodes designated in said shape data are transmitted at said transmission step.

**22.** The relative position data correction method according to one of claims 18 to 21, **characterized in that**:

each of said feature nodes is designated at a point whereat an angle difference in a predetermined area for a link constituting said shape data is equal to or greater than a predetermined angle.

**23.** A relative position data correction program, which permits a computer to perform a relative position data correction method according to one of claims 12 to 22.

**24.** A shape data generation apparatus, for obtaining map data from a map database and for generating a shape data representing a predetermined section, **characterized in that**:

said apparatus designates a feature node as a point, in a section or in the periphery of said section representing a shape data generated based on said map database, that satisfies a predetermined condition, and by generating or changing said shape data so as to include said feature node.

**25.** The shape data generation apparatus according to claim 24, **characterized in that**:

said apparatus alters relative position data for an event occurrence point, which is represented as a location relative to a node designated in a shape data generated based on said map database, into a location relative to a feature node nearest said event occurrence point.

**26.** The shape data generation apparatus according to claim 24 or 25, **characterized in that**:

said apparatus determines whether a starting point or an end point for a shape data generated based on said map database satisfies said predetermined condition; determining, in accordance with said starting point or said end point that does not satisfy said predetermined condition, whether there is a point, within a predetermined distance in said shape data, that satisfies said predetermined condition; and designating feature nodes at said starting point and said end point for said shape data, or near said starting point and said end point for said shape data.

**27.** The shape data generation apparatus according to one of claims 24 to 26, **characterized in that**:

said apparatus selects a point that is located within a predetermined distance, along a shape data, from a node or a feature node designated at a starting point or an end point for said shape data that satisfies a predetermined condition; designating said selected point as a first feature node; selecting a point that is located within a predetermined distance inward, along said shape data, of an n-th (n is a natural number) feature node that satisfies said predetermined condition; and designating said selected point as an (n+1)-th feature node.

**28.** The shape data generation apparatus according to one of claims 24 to 27, **characterized in that**:

said point that satisfies said predetermined condition is a point for which an absolute declination value, in a predetermined area between two continuous links, is equal to or greater than a predetermined value.

**29.** A shape data generation method, for obtaining map data from a map database and for generating a shape data representing a predetermined section, **characterized in that**:

designating a feature node as a point, in a section or in the periphery of said section representing a shape data generated based on said map database, that satisfies a predetermined condition; and generating or changing said shape data so as to include said feature node.

**30.** The shape data generation method according to claim 29, **characterized in that**:

altering relative position data for an event occurrence point, which is represented as a location relative to a node designated in a shape data generated based on said map database, into a position relative to a feature node nearest said event occurrence point.

**31.** The shape data generation method according to claim 29 or 30, **characterized in that**:

determining whether a starting point or an end point for a shape data generated based on said map database satisfies said predetermined condition; determining, in accordance with said starting point or said end point that does not satisfy said predetermined condition, whether there is a point, within a predetermined distance in said shape data, that satisfies said predetermined condition; and
designating feature nodes at said starting point and said end point for said shape data, or near said starting point and said end point for said shape data.

**32.** The shape data generation method according to one of claims 29 to 31, **characterized in that**:

selecting a point that is located within a predetermined distance, along a shape data, from a node or a feature node designated at a starting point or an end point for said shape data that satisfies a predetermined condition;
designating said selected point as a first feature node; selecting a point that is located within a predetermined distance inward, along said shape data, of an n-th (n is a natural number) feature node that satisfies said predetermined condition; and
designating said selected point as an (n+1)-th feature node.

**33.** The shape data generation method according to one of claims 29 to 32, **characterized in that**:

said point that satisfies said predetermined condition is a point for which an absolute declination value, in a predetermined area between two continuous links, is equal to or greater than a predetermined value.

**34.** A shape data generation program, which permits a computer to perform a shape data generation method according to one of claims 29 to 33.

FIG. 1

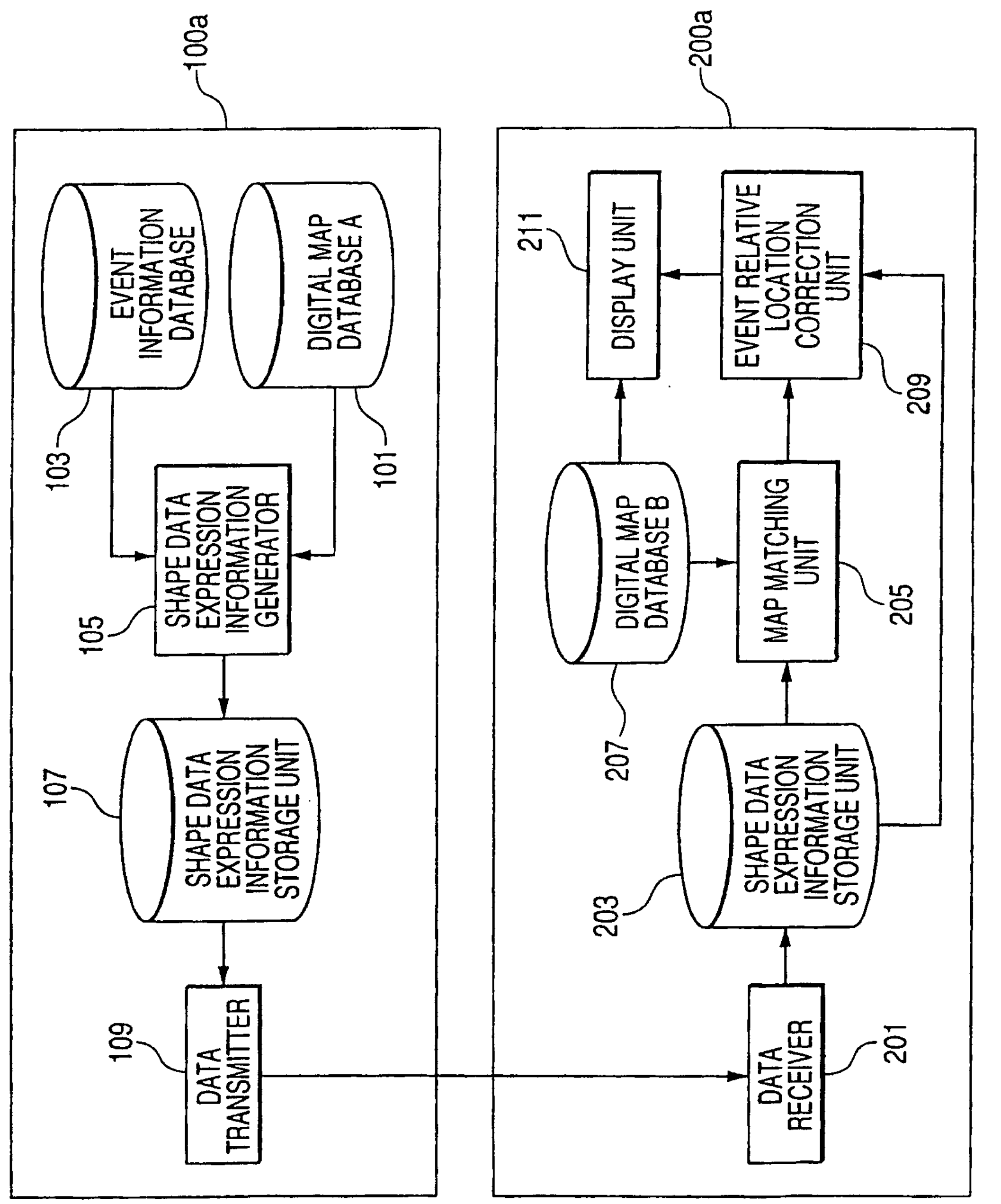
100a
EVENT INFORMATION DATABASE
103
DIGITAL MAP DATABASE A
101
SHAPE DATA EXPRESSION INFORMATION GENERATOR
105
SHAPE DATA EXPRESSION INFORMATION STORAGE UNIT
107
DATA TRANSMITTER
109
200a
DISPLAY UNIT
211
EVENT RELATIVE LOCATION CORRECTION UNIT
209
DIGITAL MAP DATABASE B
207
MAP MATCHING UNIT
205
SHAPE DATA EXPRESSION INFORMATION STORAGE UNIT
203
DATA RECEIVER
201

*FIG. 2(a)*

SHAPE DATA ARRAY

| |
|---|
| SHAPE DATA ARRAY IDENTIFICATION NUMBER=1 |
| VECTOR DATA TYPE (=ROAD) |
| TOTAL LENGTH OF SHAPE DATA |
| TOTAL NUMBER OF NODES |
| NODE NUMBER p1 |
| ABSOLUTE X-DIRECTIONAL NODE 1 COORDINATE (LONGITUDE) |
| ABSOLUTE Y-DIRECTIONAL NODE 1 COORDINATE (LATITUDE) |
| ABSOLUTE BEARING OF NODE 1 |
| ∫ |
| NODE NUMBER pN |
| ABSOLUTE X-DIRECTIONAL NODE N COORDINATE (xn) |
| ABSOLUTE Y-DIRECTIONAL NODE N COORDINATE (yn) |
| ABSOLUTE BEARING OF NODE N |
| ∫ ∫ |
| SHAPE DATA ARRAY IDENTIFICATION NUMBER=56 |
| ∫ ∫ |
| SHAPE DATA ARRAY IDENTIFICATION NUMBER=100 |
| ∫ |

*FIG. 2(b)*

EVENT INFORMATION

| |
|---|
| REFERENCE SHAPE DATA ARRAY NUMBER=56 |
| EVENT 1 (=VEHICLE TRAFFIC SUSPENSION EVENT) |
| DETAILED EVENT INFORMATION (E.G., VEHICLE TRAFFIC SUSPENSION) |
| RELATIVE LOCATION (=De) OF EVENT |
| DIRECTION IDENTIFICATION FLAG (=1) |
| ∫ |
| EVENT n (TRAFFIC CONGESTION) |
| CONGESTION RANK |
| RELATIVE LOCATION 1 (=Dj1) OF EVENT (CONGESTION START SIDE) |
| RELATIVE LOCATION 1 (=Dj2) OF EVENT (CONGESTION END SIDE) |

FIG. 3

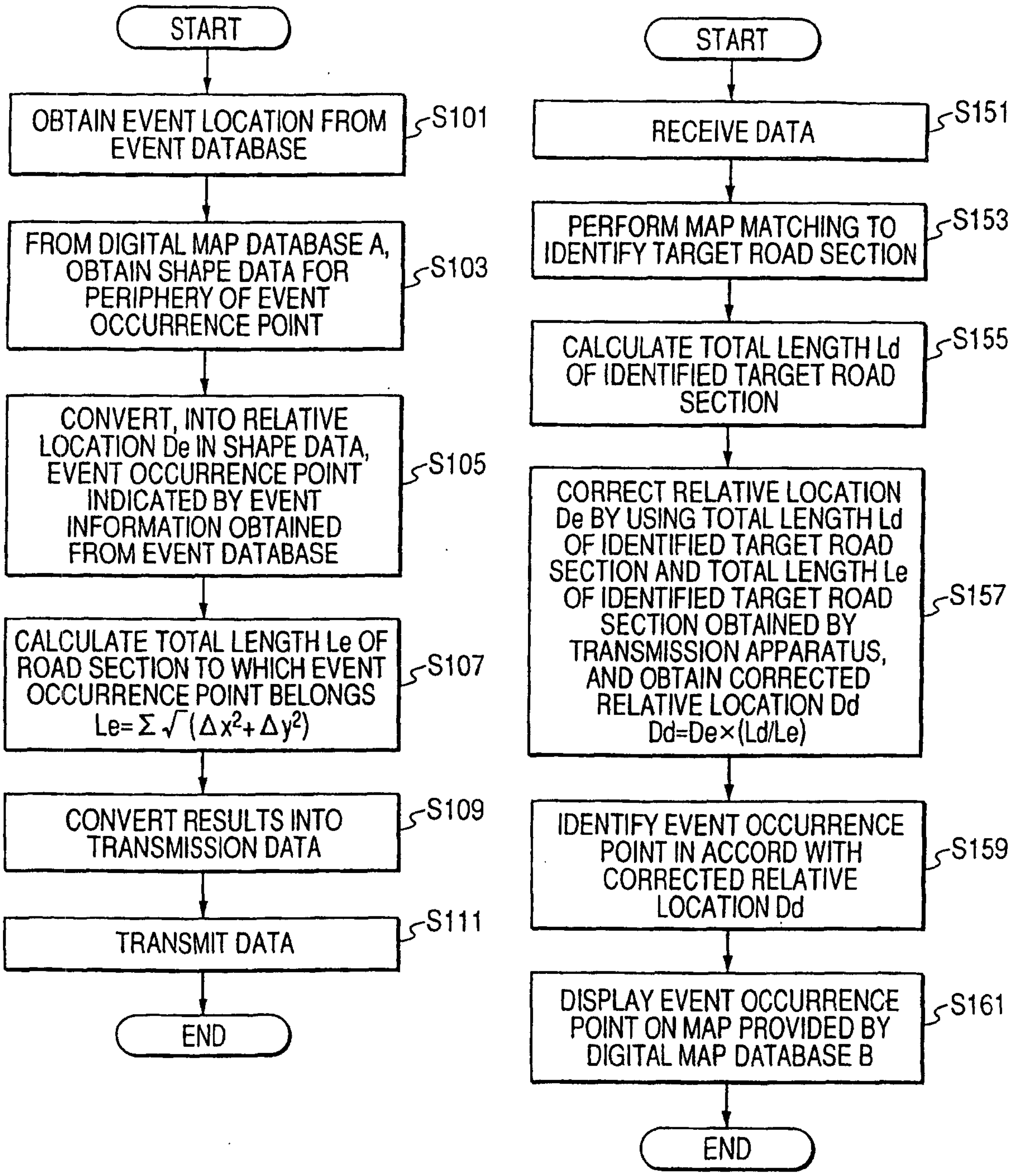
START
OBTAIN EVENT LOCATION FROM EVENT DATABASE
S101
FROM DIGITAL MAP DATABASE A, OBTAIN SHAPE DATA FOR PERIPHERY OF EVENT OCCURRENCE POINT
S103
CONVERT, INTO RELATIVE LOCATION De IN SHAPE DATA, EVENT OCCURRENCE POINT INDICATED BY EVENT INFORMATION OBTAINED FROM EVENT DATABASE
S105
CALCULATE TOTAL LENGTH Le OF ROAD SECTION TO WHICH EVENT OCCURRENCE POINT BELONGS
Le=Σ√(Δx²+Δy²)
S107
CONVERT RESULTS INTO TRANSMISSION DATA
S109
TRANSMIT DATA
S111
END
START
RECEIVE DATA
S151
PERFORM MAP MATCHING TO IDENTIFY TARGET ROAD SECTION
S153
CALCULATE TOTAL LENGTH Ld OF IDENTIFIED TARGET ROAD SECTION
S155
CORRECT RELATIVE LOCATION De BY USING TOTAL LENGTH Ld OF IDENTIFIED TARGET ROAD SECTION AND TOTAL LENGTH Le OF IDENTIFIED TARGET ROAD SECTION OBTAINED BY TRANSMISSION APPARATUS, AND OBTAIN CORRECTED RELATIVE LOCATION Dd
Dd=De×(Ld/Le)
S157
IDENTIFY EVENT OCCURRENCE POINT IN ACCORD WITH CORRECTED RELATIVE LOCATION Dd
S159
DISPLAY EVENT OCCURRENCE POINT ON MAP PROVIDED BY DIGITAL MAP DATABASE B
S161
END

FIG. 4

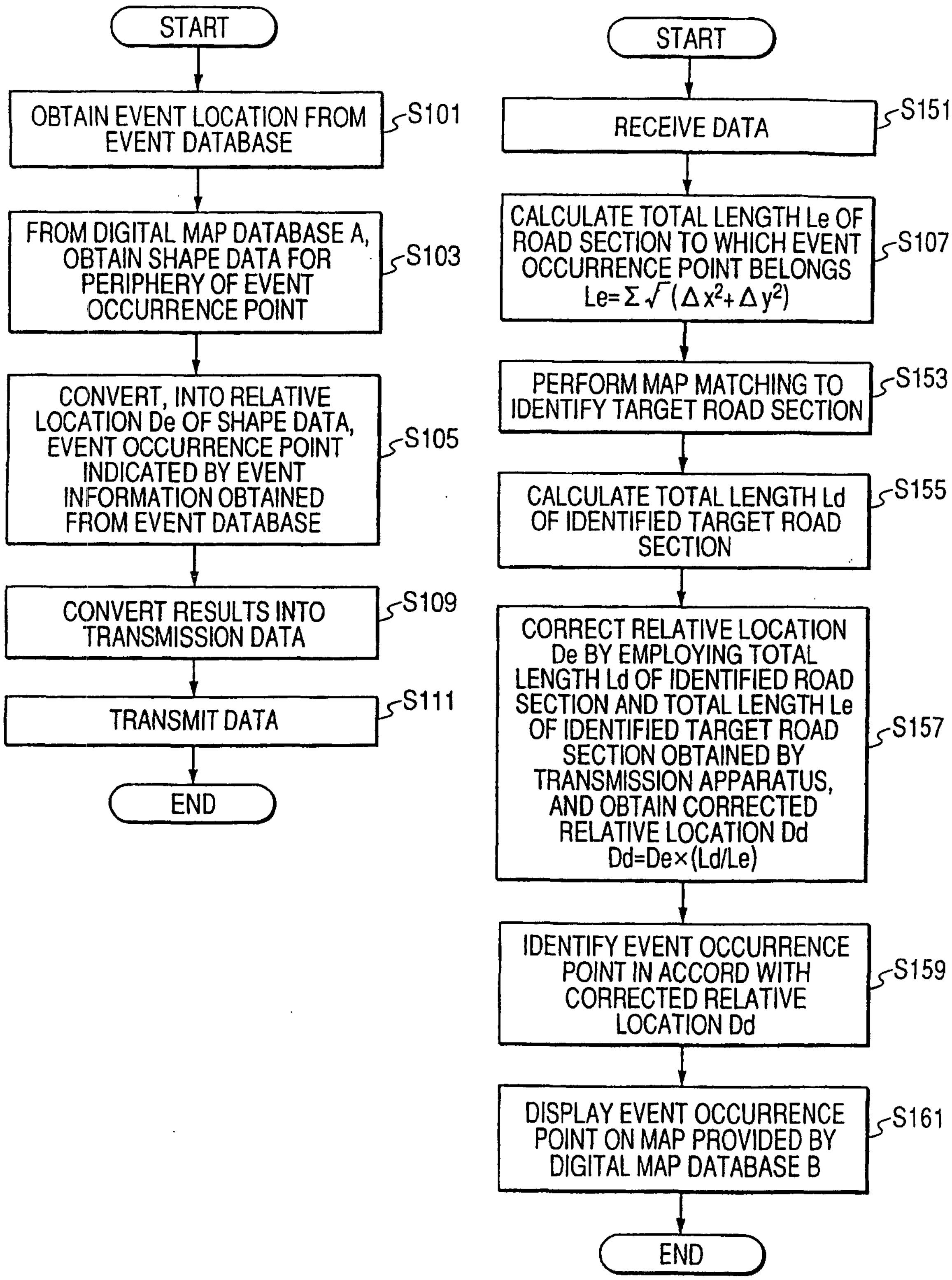
START
OBTAIN EVENT LOCATION FROM EVENT DATABASE
S101
FROM DIGITAL MAP DATABASE A, OBTAIN SHAPE DATA FOR PERIPHERY OF EVENT OCCURRENCE POINT
S103
CONVERT, INTO RELATIVE LOCATION De OF SHAPE DATA, EVENT OCCURRENCE POINT INDICATED BY EVENT INFORMATION OBTAINED FROM EVENT DATABASE
S105
CONVERT RESULTS INTO TRANSMISSION DATA
S109
TRANSMIT DATA
S111
END
START
RECEIVE DATA
S151
CALCULATE TOTAL LENGTH Le OF ROAD SECTION TO WHICH EVENT OCCURRENCE POINT BELONGS $Le=\Sigma\sqrt{(\Delta x^2+\Delta y^2)}$
S107
PERFORM MAP MATCHING TO IDENTIFY TARGET ROAD SECTION
S153
CALCULATE TOTAL LENGTH Ld OF IDENTIFIED TARGET ROAD SECTION
S155
CORRECT RELATIVE LOCATION De BY EMPLOYING TOTAL LENGTH Ld OF IDENTIFIED ROAD SECTION AND TOTAL LENGTH Le OF IDENTIFIED TARGET ROAD SECTION OBTAINED BY TRANSMISSION APPARATUS, AND OBTAIN CORRECTED RELATIVE LOCATION Dd $Dd=De\times(Ld/Le)$
S157
IDENTIFY EVENT OCCURRENCE POINT IN ACCORD WITH CORRECTED RELATIVE LOCATION Dd
S159
DISPLAY EVENT OCCURRENCE POINT ON MAP PROVIDED BY DIGITAL MAP DATABASE B
S161
END

FIG. 5

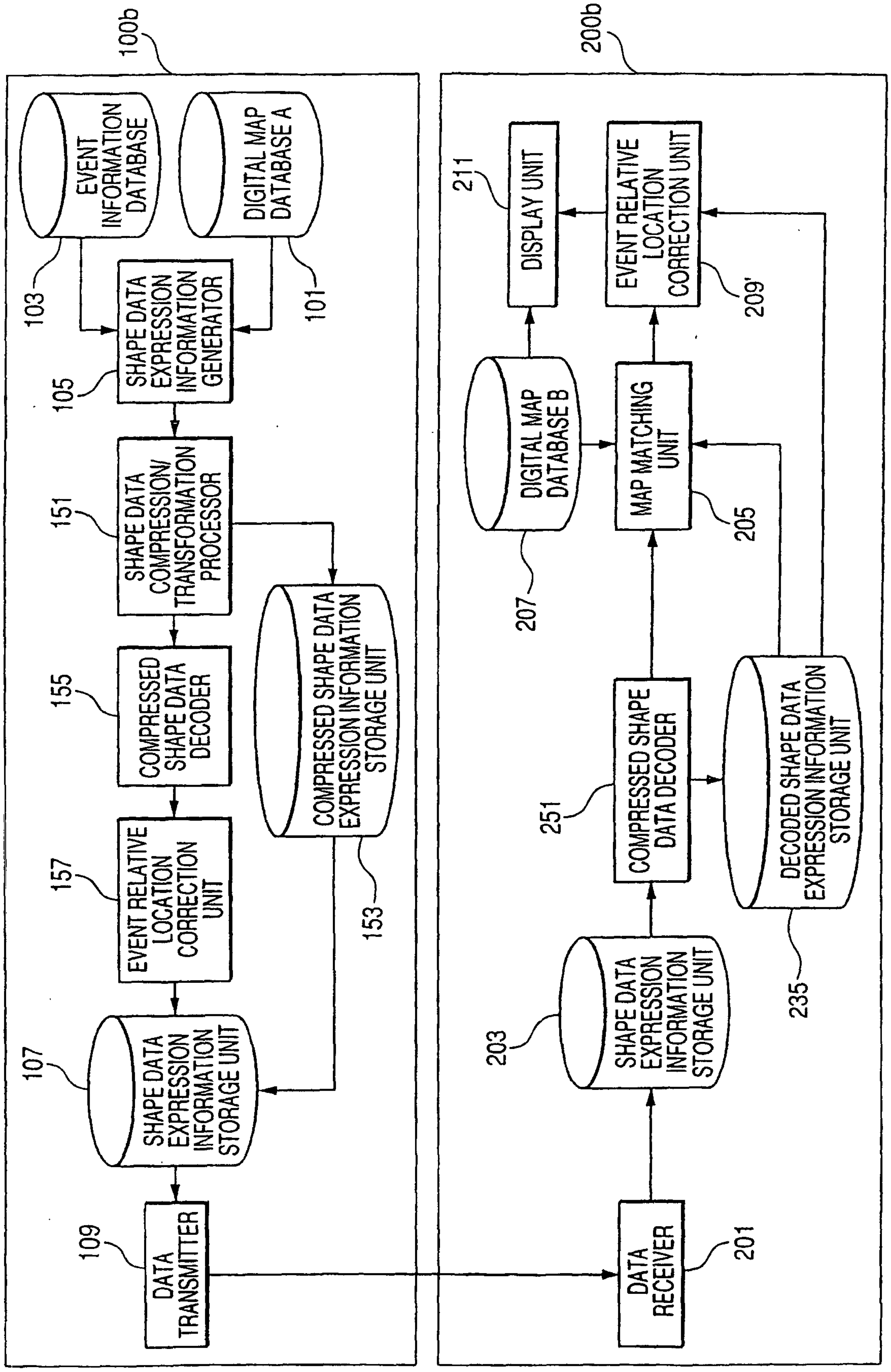
100b
EVENT INFORMATION DATABASE
103
DIGITAL MAP DATABASE A
101
SHAPE DATA EXPRESSION INFORMATION GENERATOR
105
SHAPE DATA COMPRESSION/ TRANSFORMATION PROCESSOR
151
COMPRESSED SHAPE DATA EXPRESSION INFORMATION STORAGE UNIT
153
COMPRESSED SHAPE DATA DECODER
155
EVENT RELATIVE LOCATION CORRECTION UNIT
157
SHAPE DATA EXPRESSION INFORMATION STORAGE UNIT
107
DATA TRANSMITTER
109
200b
DISPLAY UNIT
211
EVENT RELATIVE LOCATION CORRECTION UNIT
209'
DIGITAL MAP DATABASE B
207
MAP MATCHING UNIT
205
COMPRESSED SHAPE DATA DECODER
251
DECODED SHAPE DATA EXPRESSION INFORMATION STORAGE UNIT
235
SHAPE DATA EXPRESSION INFORMATION STORAGE UNIT
203
DATA RECEIVER
201

FIG. 6(a)

SHAPE DATA ARRAY

| |
|---|
| SHAPE DATA ARRAY IDENTIFICATION NUMBER=1 |
| VECTOR DATA TYPE (=ROAD) |
| TOTAL NUMBER OF NODES (N) |
| ABSOLUTE X-DIRECTIONAL HEAD NODE 1 COORDINATE (LONGITUDE) |
| ABSOLUTE Y-DIRECTIONAL HEAD NODE 1 COORDINATE (LATITUDE) |
| ABSOLUTE BEARING OF HEAD NODE 1 |
| DISTANCE L FROM HEAD NODE 1 TO SUCCEEDING SHAPE NODE |
| COMPRESSED/TRANSFORMED DATA FOR SHAPE BETWEEN HEAD NODE TO TERMINAL NODE |
| ~ ~ |
| SHAPE DATA ARRAY IDENTIFICATION NUMBER=56 |
| ~ ~ |
| SHAPE DATA ARRAY IDENTIFICATION NUMBER=100 |
| ~ |

FIG. 6(b)

EVENT INFORMATION

| |
|---|
| REFERENCE SHAPE DATA ARRAY NUMBER=56 |
| EVENT 1 (=VEHICLE TRAFFIC SUSPENSION EVENT) |
| DETAILED EVENT INFORMATION (E.G., VEHICLE TRAFFIC SUSPENSION) |
| RELATIVE LOCATION (=Da') OF EVENT |
| DIRECTION IDENTIFICATION FLAG (=1) |
| ~ |
| EVENT n (TRAFFIC CONGESTION) |
| CONGESTION RANK |
| RELATIVE LOCATION 1 (=Dj1') OF EVENT (CONGESTION START SIDE) |
| RELATIVE LOCATION 1 (=Dj2') OF EVENT (CONGESTION END SIDE) |

FIG. 7

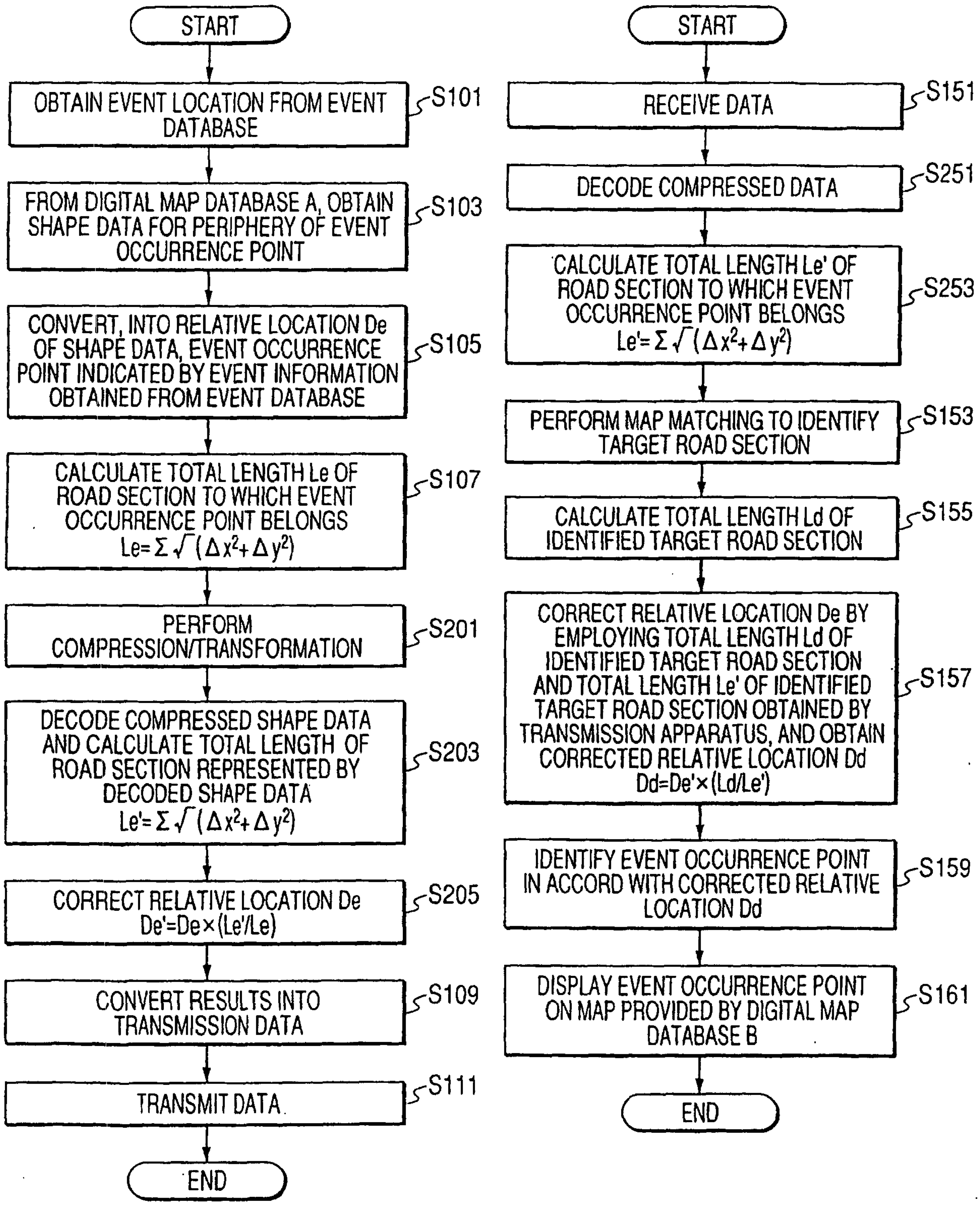
START
OBTAIN EVENT LOCATION FROM EVENT DATABASE
S101
FROM DIGITAL MAP DATABASE A, OBTAIN SHAPE DATA FOR PERIPHERY OF EVENT OCCURRENCE POINT
S103
CONVERT, INTO RELATIVE LOCATION De OF SHAPE DATA, EVENT OCCURRENCE POINT INDICATED BY EVENT INFORMATION OBTAINED FROM EVENT DATABASE
S105
CALCULATE TOTAL LENGTH Le OF ROAD SECTION TO WHICH EVENT OCCURRENCE POINT BELONGS $Le=\Sigma\sqrt{(\Delta x^2+\Delta y^2)}$
S107
PERFORM COMPRESSION/TRANSFORMATION
S201
DECODE COMPRESSED SHAPE DATA AND CALCULATE TOTAL LENGTH OF ROAD SECTION REPRESENTED BY DECODED SHAPE DATA $Le'=\Sigma\sqrt{(\Delta x^2+\Delta y^2)}$
S203
CORRECT RELATIVE LOCATION De $De'=De\times(Le'/Le)$
S205
CONVERT RESULTS INTO TRANSMISSION DATA
S109
TRANSMIT DATA
S111
END
START
RECEIVE DATA
S151
DECODE COMPRESSED DATA
S251
CALCULATE TOTAL LENGTH Le' OF ROAD SECTION TO WHICH EVENT OCCURRENCE POINT BELONGS $Le'=\Sigma\sqrt{(\Delta x^2+\Delta y^2)}$
S253
PERFORM MAP MATCHING TO IDENTIFY TARGET ROAD SECTION
S153
CALCULATE TOTAL LENGTH Ld OF IDENTIFIED TARGET ROAD SECTION
S155
CORRECT RELATIVE LOCATION De BY EMPLOYING TOTAL LENGTH Ld OF IDENTIFIED TARGET ROAD SECTION AND TOTAL LENGTH Le' OF IDENTIFIED TARGET ROAD SECTION OBTAINED BY TRANSMISSION APPARATUS, AND OBTAIN CORRECTED RELATIVE LOCATION Dd $Dd=De'\times(Ld/Le')$
S157
IDENTIFY EVENT OCCURRENCE POINT IN ACCORD WITH CORRECTED RELATIVE LOCATION Dd
S159
DISPLAY EVENT OCCURRENCE POINT ON MAP PROVIDED BY DIGITAL MAP DATABASE B
S161
END

*FIG. 8(a)*

SHAPE DATA ARRAY

| |
|---|
| SHAPE DATA ARRAY IDENTIFICATION NUMBER=1 |
| VECTOR DATA TYPE (=ROAD) |
| TOTAL NUMBER OF NODES (N) |
| ABSOLUTE X-DIRECTIONAL HEAD NODE 1 COORDINATE (LONGITUDE) |
| ABSOLUTE Y-DIRECTIONAL HEAD NODE 1 COORDINATE (LATITUDE) |
| ABSOLUTE BEARING OF HEAD NODE 1 |
| DISTANCE L FROM HEAD NODE 1 TO SUCCEEDING SHAPE NODE |
| TRANSFORMED/COMPRESSED DATA FOR SHAPE BETWEEN HEAD NODE AND TERMINAL NODE |
| ≀ ≀ |
| SHAPE DATA ARRAY IDENTIFICATION NUMBER=56 |
| ≀ ≀ |
| SHAPE DATA ARRAY IDENTIFICATION NUMBER=100 |
| ≀ |

*FIG. 8(b)*

EVENT INFORMATION

| | |
|---|---|
| REFERENCE SHAPE DATA ARRAY NUMBER=56 | |
| EVENT 1 (=VEHICLE TRAFFIC SUSPENSION EVENT) | |
| DETAILED EVENT INFORMATION (E.G., VEHICLE TRAFFIC SUSPENSION) | |
| FEATURE NODE NUMBER 1 (Pm) | FEATURE NODE NUMBER 2 (Pn) |
| RELATIVE LOCATION (=De-1') OF EVENT FROM Pm | |
| DIRECTION IDENTIFICATION FLAG (=1) | |
| ≀ | |
| EVENT n (TRAFFIC CONGESTION) | |
| CONGESTION RANK | |
| FEATURE NODE NUMBER 1 (Pm') | FEATURE NODE NUMBER 2 (Pn') |
| RELATIVE LOCATION 1 (=De-j1') OF EVENT FROM Pm' (CONGESTION START SIDE) | |
| RELATIVE LOCATION 1 (=De-j2') OF EVENT FROM Pm' (CONGESTION END SIDE) | |

FIG. 9

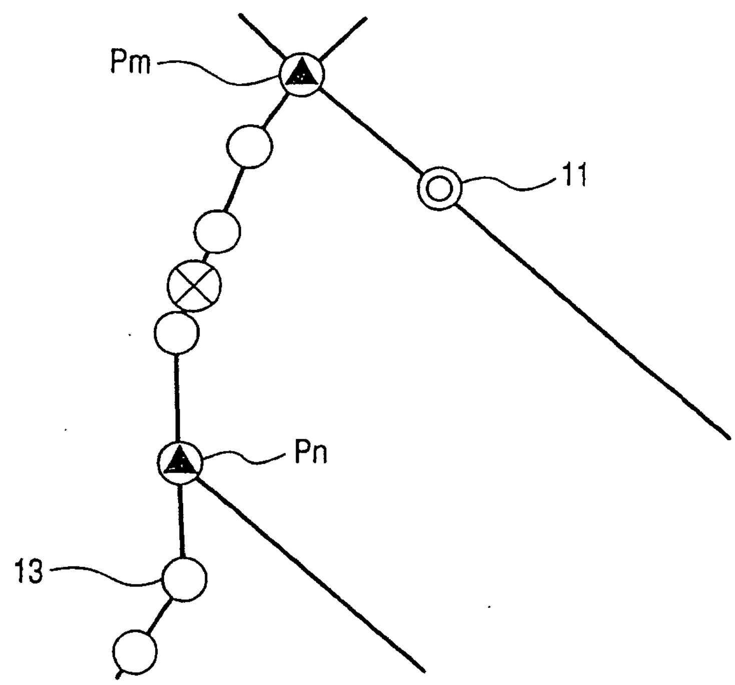

FIG. 10

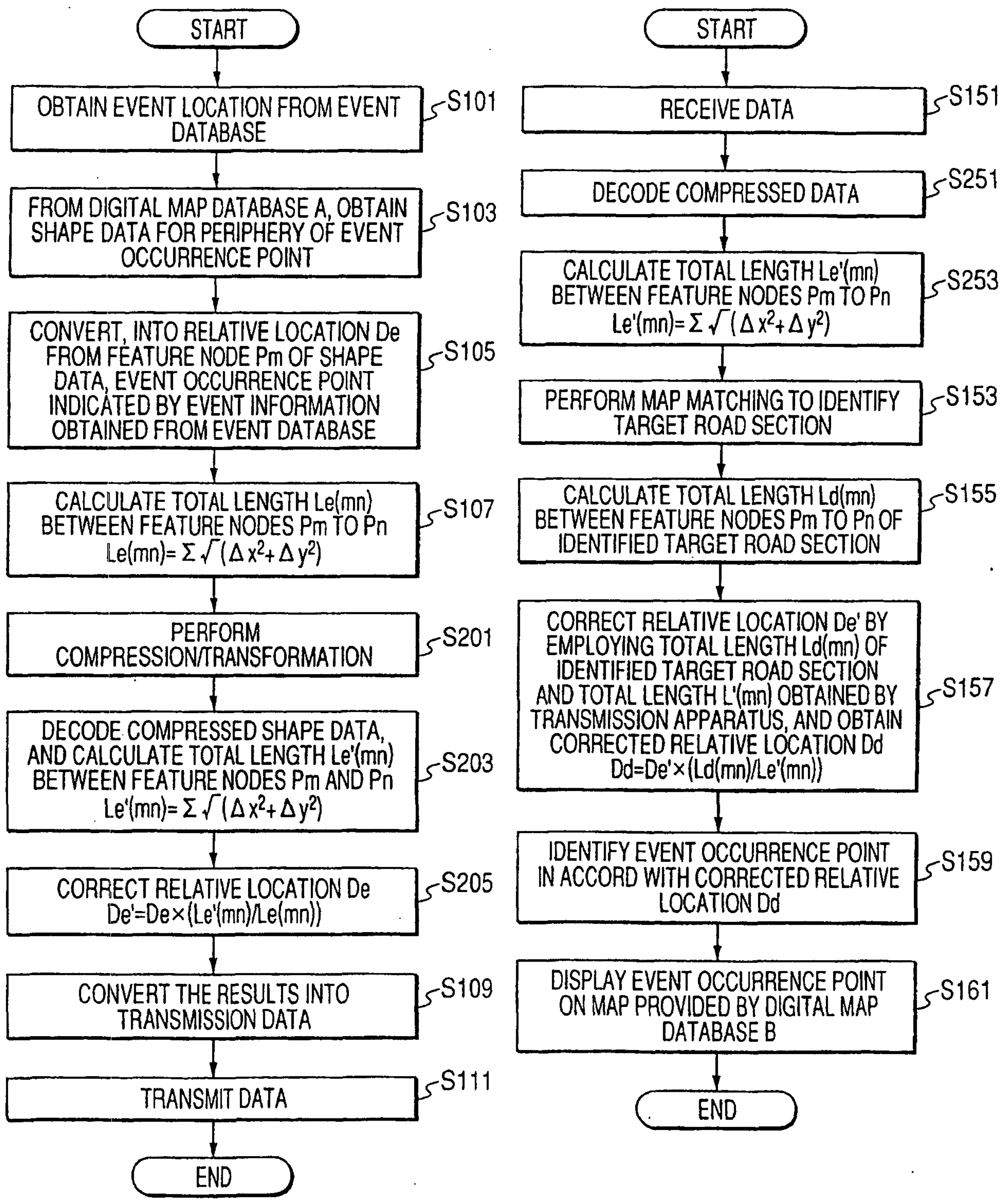
START
OBTAIN EVENT LOCATION FROM EVENT DATABASE
S101
FROM DIGITAL MAP DATABASE A, OBTAIN SHAPE DATA FOR PERIPHERY OF EVENT OCCURRENCE POINT
S103
CONVERT, INTO RELATIVE LOCATION De FROM FEATURE NODE Pm OF SHAPE DATA, EVENT OCCURRENCE POINT INDICATED BY EVENT INFORMATION OBTAINED FROM EVENT DATABASE
S105
CALCULATE TOTAL LENGTH Le(mn) BETWEEN FEATURE NODES Pm TO Pn
$Le(mn)=\Sigma\sqrt{(\Delta x^2+\Delta y^2)}$
S107
PERFORM COMPRESSION/TRANSFORMATION
S201
DECODE COMPRESSED SHAPE DATA, AND CALCULATE TOTAL LENGTH Le'(mn) BETWEEN FEATURE NODES Pm AND Pn
$Le'(mn)=\Sigma\sqrt{(\Delta x^2+\Delta y^2)}$
S203
CORRECT RELATIVE LOCATION De
$De'=De\times(Le'(mn)/Le(mn))$
S205
CONVERT THE RESULTS INTO TRANSMISSION DATA
S109
TRANSMIT DATA
S111
END
START
RECEIVE DATA
S151
DECODE COMPRESSED DATA
S251
CALCULATE TOTAL LENGTH Le'(mn) BETWEEN FEATURE NODES Pm TO Pn
$Le'(mn)=\Sigma\sqrt{(\Delta x^2+\Delta y^2)}$
S253
PERFORM MAP MATCHING TO IDENTIFY TARGET ROAD SECTION
S153
CALCULATE TOTAL LENGTH Ld(mn) BETWEEN FEATURE NODES Pm TO Pn OF IDENTIFIED TARGET ROAD SECTION
S155
CORRECT RELATIVE LOCATION De' BY EMPLOYING TOTAL LENGTH Ld(mn) OF IDENTIFIED TARGET ROAD SECTION AND TOTAL LENGTH L'(mn) OBTAINED BY TRANSMISSION APPARATUS, AND OBTAIN CORRECTED RELATIVE LOCATION Dd
$Dd=De'\times(Ld(mn)/Le'(mn))$
S157
IDENTIFY EVENT OCCURRENCE POINT IN ACCORD WITH CORRECTED RELATIVE LOCATION Dd
S159
DISPLAY EVENT OCCURRENCE POINT ON MAP PROVIDED BY DIGITAL MAP DATABASE B
S161
END

# FIG. 11

SHAPE DATA ATTRIBUTE INFORMATION

| |
|---|
| SHAPE DATA IDENTIFICATION NUMBER (=56) |
| NODE NUMBER (=P1: HEAD) |
| NODE TYPE CODE |
| NODE NUMBER (=Pm') |
| NODE TYPE CODE |
| NODE NUMBER (=Pn') |
| NODE TYPE CODE |
| ~ |
| NODE NUMBER (=Pz': TERMINAL) |
| NODE TYPE CODE |
| ~ ~ |
| SHAPE DATA ARRAY IDENTIFICATION NUMBER (=999) |
| ~ ~ |

FIG. 12

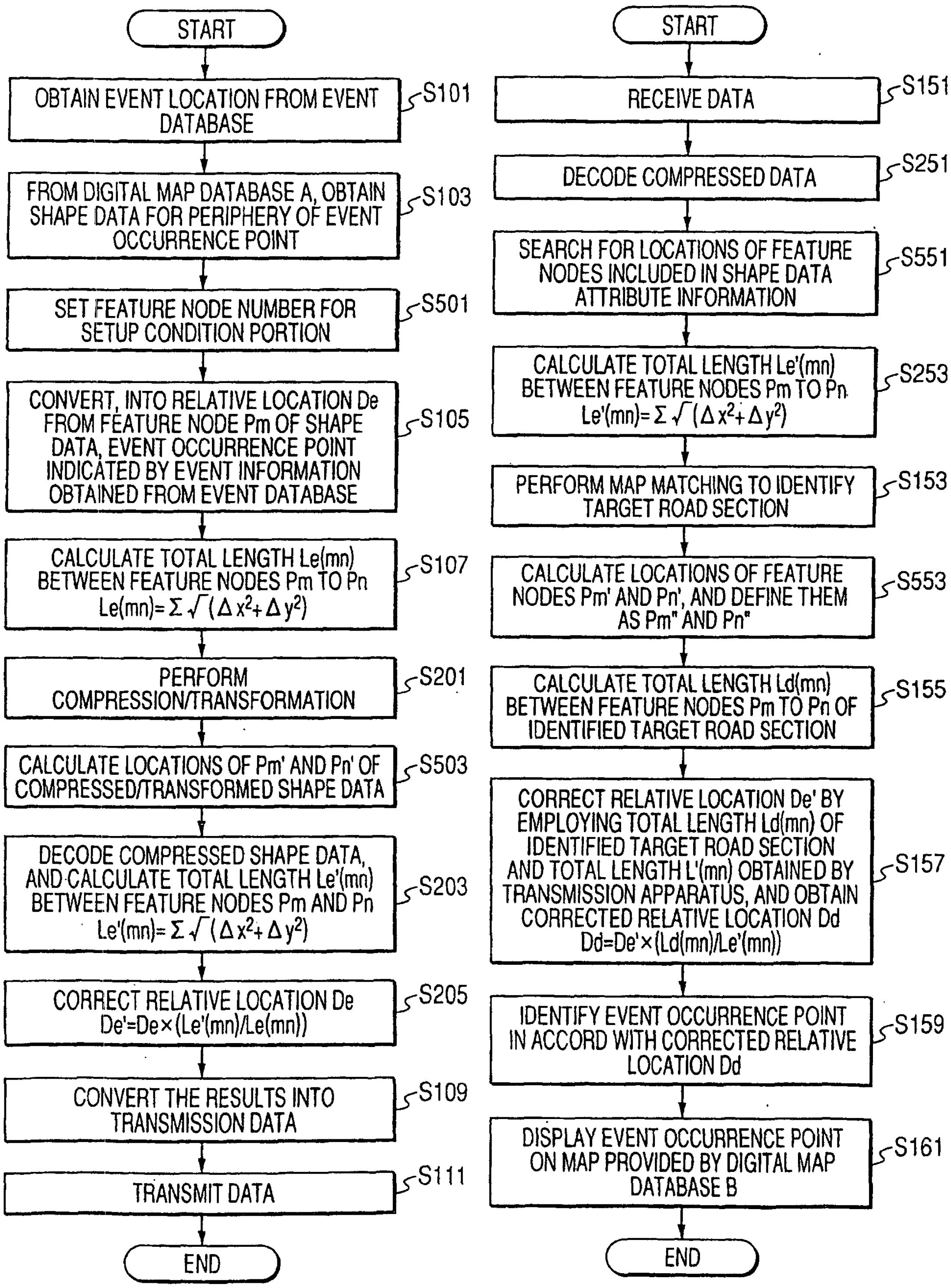
START
OBTAIN EVENT LOCATION FROM EVENT DATABASE
S101
FROM DIGITAL MAP DATABASE A, OBTAIN SHAPE DATA FOR PERIPHERY OF EVENT OCCURRENCE POINT
S103
SET FEATURE NODE NUMBER FOR SETUP CONDITION PORTION
S501
CONVERT, INTO RELATIVE LOCATION De FROM FEATURE NODE Pm OF SHAPE DATA, EVENT OCCURRENCE POINT INDICATED BY EVENT INFORMATION OBTAINED FROM EVENT DATABASE
S105
CALCULATE TOTAL LENGTH Le(mn) BETWEEN FEATURE NODES Pm TO Pn
Le(mn)=Σ√(Δx²+Δy²)
S107
PERFORM COMPRESSION/TRANSFORMATION
S201
CALCULATE LOCATIONS OF Pm' AND Pn' OF COMPRESSED/TRANSFORMED SHAPE DATA
S503
DECODE COMPRESSED SHAPE DATA, AND CALCULATE TOTAL LENGTH Le'(mn) BETWEEN FEATURE NODES Pm AND Pn
Le'(mn)=Σ√(Δx²+Δy²)
S203
CORRECT RELATIVE LOCATION De
De'=De×(Le'(mn)/Le(mn))
S205
CONVERT THE RESULTS INTO TRANSMISSION DATA
S109
TRANSMIT DATA
S111
END
START
RECEIVE DATA
S151
DECODE COMPRESSED DATA
S251
SEARCH FOR LOCATIONS OF FEATURE NODES INCLUDED IN SHAPE DATA ATTRIBUTE INFORMATION
S551
CALCULATE TOTAL LENGTH Le'(mn) BETWEEN FEATURE NODES Pm TO Pn
Le'(mn)=Σ√(Δx²+Δy²)
S253
PERFORM MAP MATCHING TO IDENTIFY TARGET ROAD SECTION
S153
CALCULATE LOCATIONS OF FEATURE NODES Pm' AND Pn', AND DEFINE THEM AS Pm" AND Pn"
S553
CALCULATE TOTAL LENGTH Ld(mn) BETWEEN FEATURE NODES Pm TO Pn OF IDENTIFIED TARGET ROAD SECTION
S155
CORRECT RELATIVE LOCATION De' BY EMPLOYING TOTAL LENGTH Ld(mn) OF IDENTIFIED TARGET ROAD SECTION AND TOTAL LENGTH L'(mn) OBTAINED BY TRANSMISSION APPARATUS, AND OBTAIN CORRECTED RELATIVE LOCATION Dd
Dd=De'×(Ld(mn)/Le'(mn))
S157
IDENTIFY EVENT OCCURRENCE POINT IN ACCORD WITH CORRECTED RELATIVE LOCATION Dd
S159
DISPLAY EVENT OCCURRENCE POINT ON MAP PROVIDED BY DIGITAL MAP DATABASE B
S161
END

FIG. 13(a)

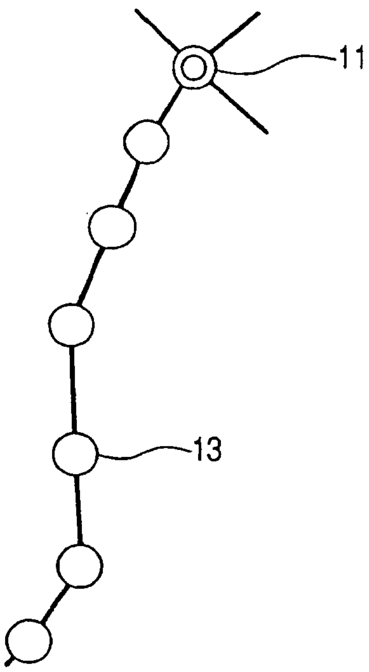


FIG. 13(b)

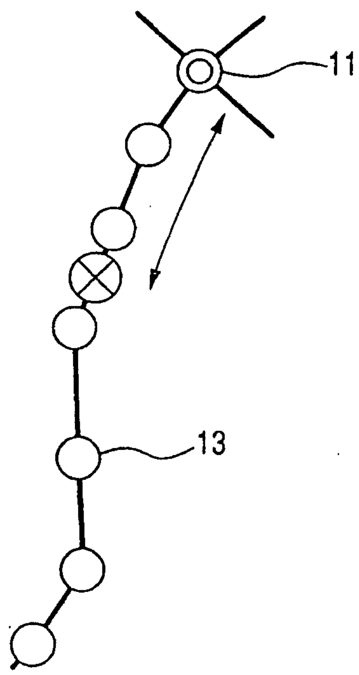

FIG. 14(a)

SHAPE DATA ARRAY

| |
|---|
| SHAPE DATA ARRAY IDENTIFICATION NUMBER=1 |
| VECTOR DATA TYPE (=ROAD) |
| TOTAL NUMBER OF NODES |
| NODE NUMBER p1 |
| ABSOLUTE X-DIRECTIONAL NODE 1 COORDINATE (LONGITUDE) |
| ABSOLUTE Y-DIRECTIONAL NODE 1 COORDINATE (LATITUDE) |
| ABSOLUTE BEARING OF NODE 1 |
| ~ |
| NODE NUMBER pN |
| RELATIVE NODE N COORDINATE (xn) |
| RELATIVE NODE N COORDINATE (yn) |
| RELATIVE BEARING OF NODE N |
| ~ ~ |
| SHAPE DATA ARRAY IDENTIFICATION NUMBER=56 |
| ~ ~ |
| SHAPE DATA ARRAY IDENTIFICATION NUMBER=100 |
| ~ |

FIG. 14(b)

EVENT INFORMATION

| |
|---|
| REFERENCE SHAPE DATA ARRAY NUMBER=56 |
| EVENT 1 (=VEHICLE TRAFFIC SUSPENSION EVENT) |
| DETAILED EVENT INFORMATION (E.G., VEHICLE TRAFFIC SUSPENSION) |
| RELATIVE LOCATION (=Da) OF EVENT |
| DIRECTION IDENTIFICATION FLAG (=1) |
| ~ |
| EVENT n (TRAFFIC CONGESTION) |
| CONGESTION RANK |
| RELATIVE LOCATION 1 (=Dj1) OF EVENT (CONGESTION START SIDE) |
| RELATIVE LOCATION 1 (=Dj2) OF EVENT (CONGESTION END SIDE) |

FIG. 15(a)

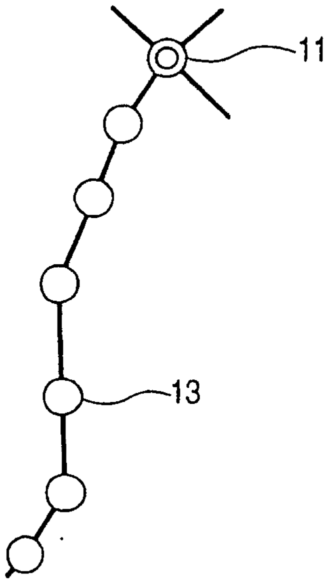


DIGITAL MAP DATABASE
PROVIDED BY COMPANY A

FIG. 15(b)

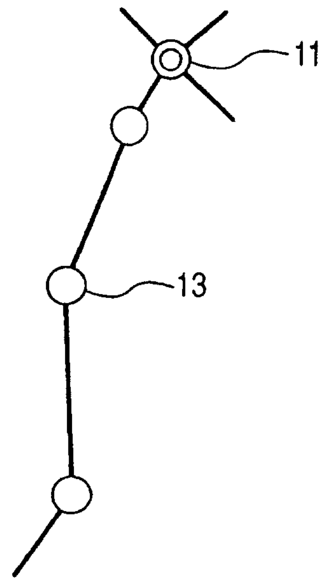


DIGITAL MAP DATABASE
PROVIDED BY COMPANY B

FIG. 16(a)

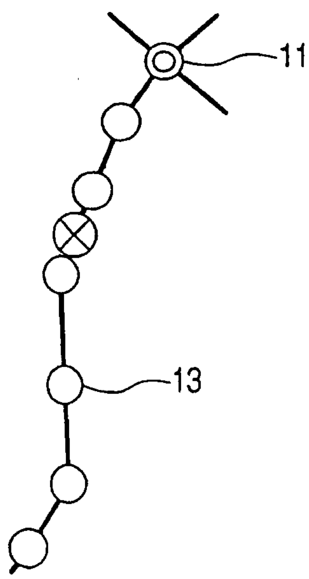


DIGITAL MAP DATABASE
PROVIDED BY COMPANY A

FIG. 16(b)

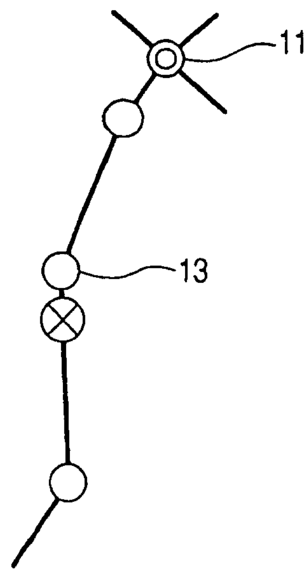


DIGITAL MAP DATABASE
PROVIDED BY COMPANY B

# FIG. 17

| | |
|---|---|
| HEADER INFORMATION (INFORMATION TYPE/SECTION DEFINITION, ETC.) | |
| NODE COUNT N | |
| NODE NUMBER 1 | |
| NODE ATTRIBUTE INFORMATION FOR NODE 1 | |
| LONGITUDE OF NODE 1 | LATITUDE OF NODE 1 |
| NUMBER OF NODES CONNECTED TO NODE 1 | |
| CONNECTED NODE NUMBER #1 | LINK NUMBER #1-1 |
| ~ | |
| CONNECTED NODE NUMBER #m | LINK NUMBER #1-m |
| ~ ~ | |
| NODE NUMBER N | |
| NODE ATTRIBUTE INFORMATION FOR NODE N | |
| LONGITUDE OF NODE N | LATITUDE OF NODE N |
| NUMBER OF NODES CONNECTED TO NODE N | |
| CONNECTED NODE NUMBER #1 | LINK NUMBER #N-1 |
| ~ | |
| CONNECTED NODE NUMBER #m | LINK NUMBER #N-m |
| LINK COUNT L | |
| LINK NUMBER 1 | |
| LINK ATTRIBUTE INFORMATION FOR LINK 1 | |
| NUMBER OF INTERPOLATION POINTS FOR LINK 1 | |
| LONGITUDE OF INTERPOLATION POINT 1-1 | LATITUDE OF INTERPOLATION POINT 1-1 |
| ~ | |
| LONGITUDE OF INTERPOLATION POINT 1-p | LATITUDE OF INTERPOLATION POINT 1-p |
| ~ ~ | |
| LINK NUMBER L | |
| LINK ATTRIBUTE INFORMATION FOR LINK L | |
| NUMBER OF INTERPOLATION POINTS FOR LINK L | |
| LONGITUDE OF INTERPOLATION POINT L-1 | LATITUDE OF INTERPOLATION POINT L-1 |
| ~ | |
| LONGITUDE OF INTERPOLATION POINT L-p | LATITUDE OF INTERPOLATION POINT L-p |

FIG. 18

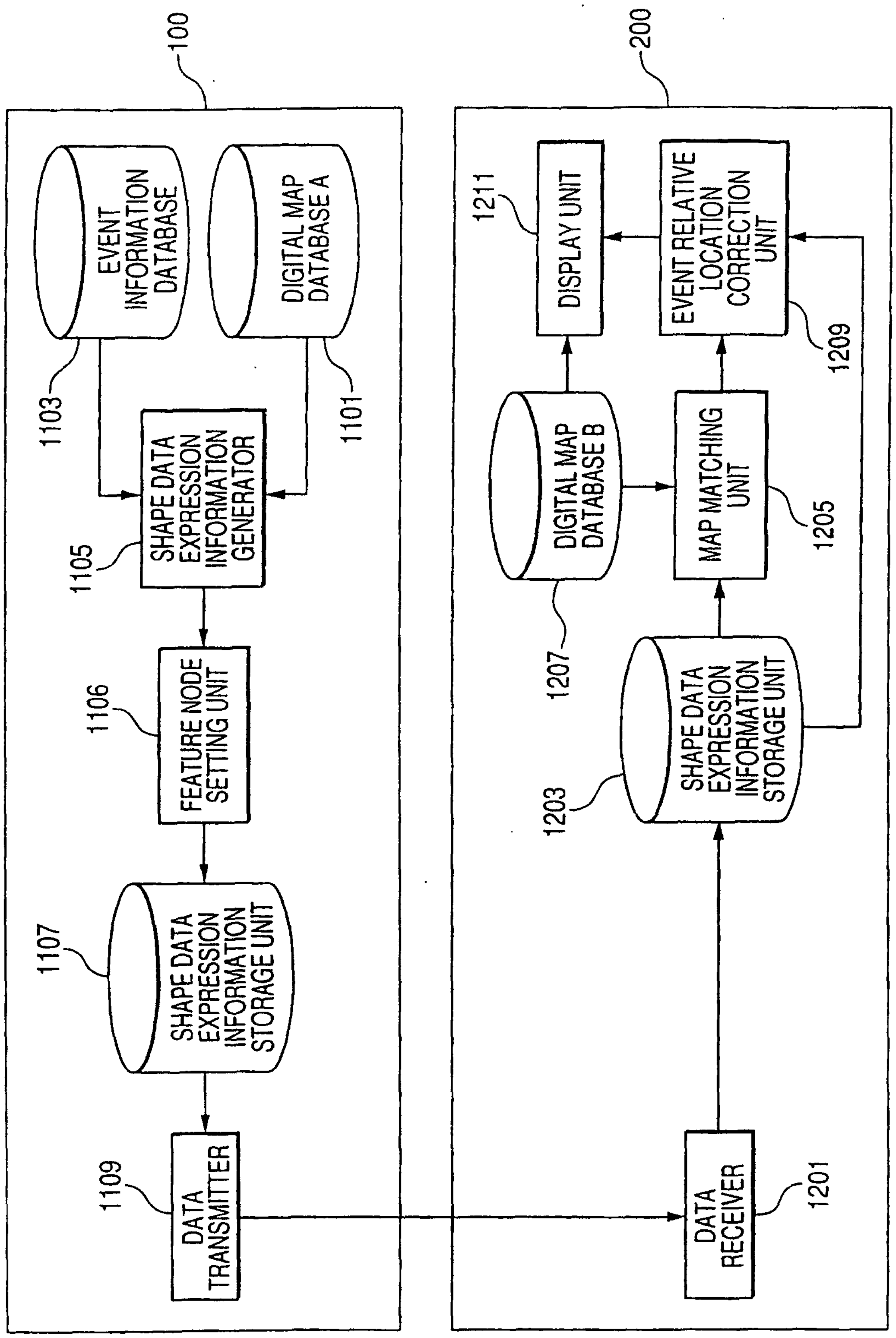
100
EVENT INFORMATION DATABASE
1103
DIGITAL MAP DATABASE A
1101
SHAPE DATA EXPRESSION INFORMATION GENERATOR
1105
FEATURE NODE SETTING UNIT
1106
SHAPE DATA EXPRESSION INFORMATION STORAGE UNIT
1107
DATA TRANSMITTER
1109
200
DISPLAY UNIT
1211
EVENT RELATIVE LOCATION CORRECTION UNIT
1209
DIGITAL MAP DATABASE B
1207
MAP MATCHING UNIT
1205
SHAPE DATA EXPRESSION INFORMATION STORAGE UNIT
1203
DATA RECEIVER
1201

## FIG. 19(a)

SHAPE DATA ARRAY

| | |
|---|---|
| SHAPE DATA ARRAY IDENTIFICATION NUMBER=1 | |
| VECTOR DATA TYPE (=ROAD) | |
| TOTAL NUMBER OF NODES | |
| NODE NUMBER p1 | |
| ABSOLUTE X-DIRECTIONAL NODE 1 COORDINATE (LONGITUDE) | |
| ABSOLUTE Y-DIRECTIONAL NODE 1 COORDINATE (LATITUDE) | |
| ABSOLUTE BEARING OF NODE 1 | |
| ⁓ | |
| NODE NUMBER pN | |
| RELATIVE NODE N COORDINATE (xn) | |
| RELATIVE NODE N COORDINATE (yn) | |
| RELATIVE BEARING OF NODE N | |
| ⁓ ⁓ | |
| SHAPE DATA ARRAY IDENTIFICATION NUMBER=56 | |
| ⁓ ⁓ | |
| SHAPE DATA ARRAY IDENTIFICATION NUMBER=100 | |
| ⁓ | |

## FIG. 19(b)

EVENT INFORMATION

| | |
|---|---|
| REFERENCE SHAPE DATA ARRAY NUMBER (=56) | |
| EVENT 1 (=VEHICLE TRAFFIC SUSPENSION EVENT) | |
| DETAILED EVENT INFORMATION (E.G., VEHICLE TRAFFIC SUSPENSION) | |
| NODE NUMBER 1 (Pm') | NODE NUMBER 2 (Pn') |
| RELATIVE LOCATION OF EVENT FROM Pm' | |
| DIRECTION IDENTIFICATION FLAG (=1) | |
| ⁓ | |
| EVENT n (TRAFFIC CONGESTION) | |
| CONGESTION RANK | |
| NODE NUMBER 1 (Pm') | NODE NUMBER 2 (Pn') |
| RELATIVE LOCATION 1 OF EVENT FROM Pm' (CONGESTION START SIDE) | |
| RELATIVE LOCATION 1 OF EVENT FROM Pm' (CONGESTION END SIDE) | |

## FIG. 19(c)

FEATURE NODE INFORMATION

| |
|---|
| SHAPE DATA IDENTIFICATION NUMBER (=1) |
| NODE NUMBER Pm OF FEATURE NODE #1 |
| NODE NUMBER Pn OF FEATURE NODE #2 |
| DISTANCE BETWEEN FEATURE NODES #1 AND #2 |
| ⁓ |
| SHAPE DATA IDENTIFICATION NUMBER (=Z) |
| NODE NUMBER Pm' OF FEATURE NODE #p |
| NODE NUMBER Pn' OF FEATURE NODE #q |
| DISTANCE BETWEEN FEATURE NODES #p AND #q |

FIG. 20(a)

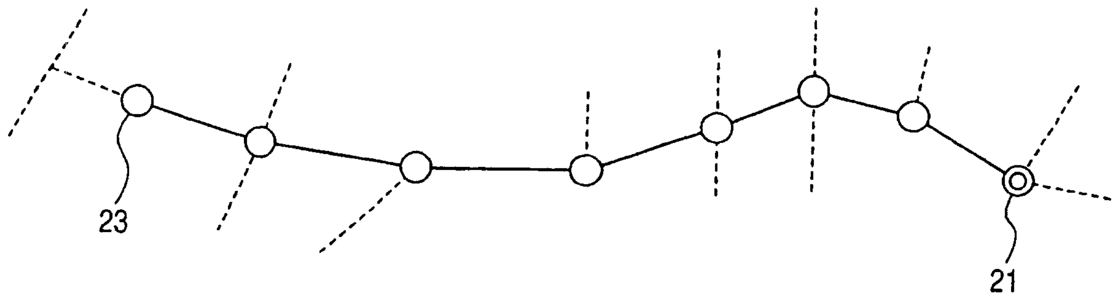


FIG. 20(b)

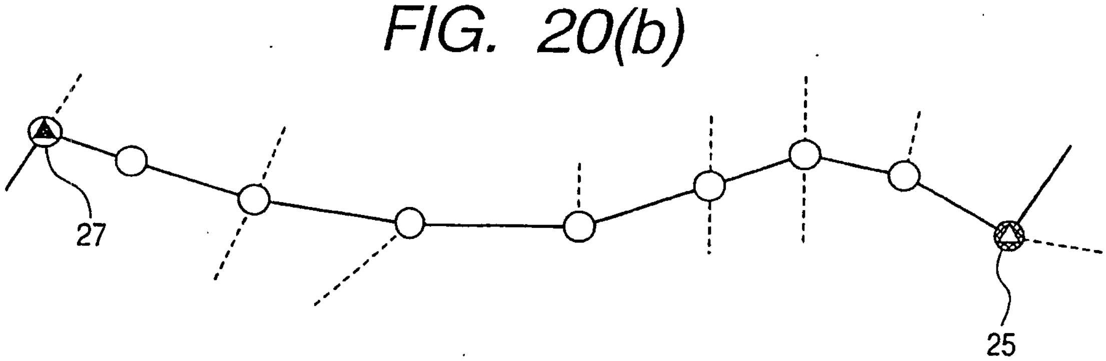


FIG. 20(c)

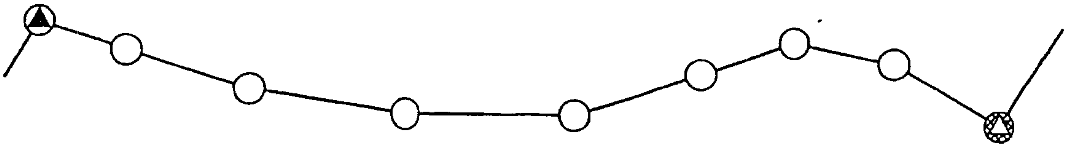

FIG. 21(a)

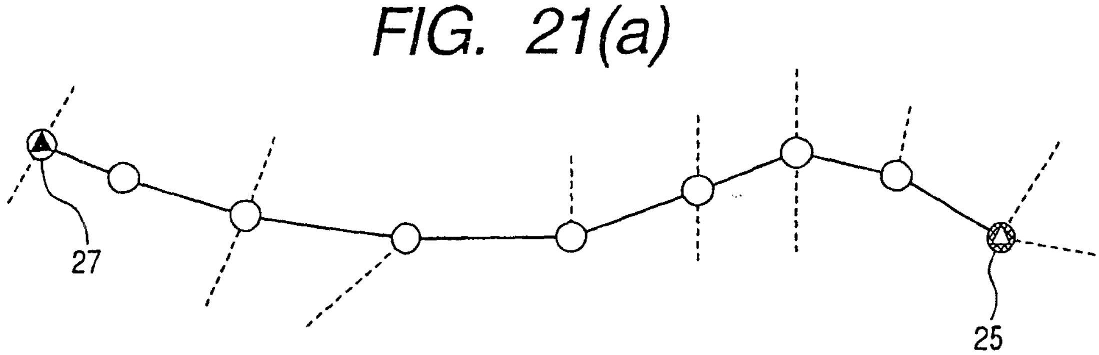


FIG. 21(b)

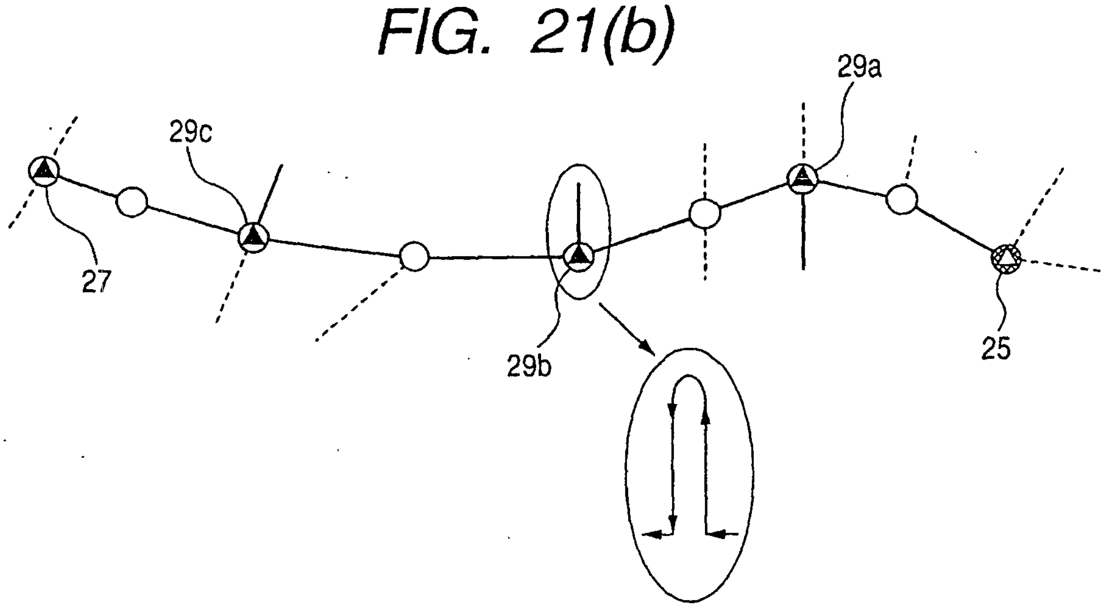


FIG. 21(c)

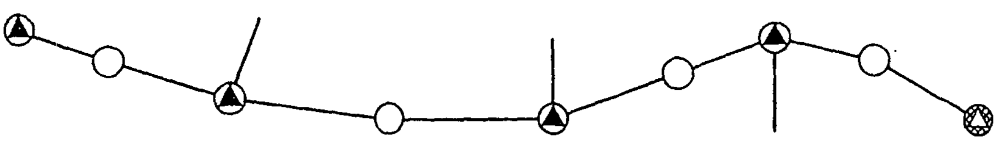

# FIG. 22

EVENT INFORMATION

| | |
|---|---|
| REFERENCE SHAPE DATA ARRAY NUMBER (=56) | |
| EVENT 1 (=VEHICLE TRAFFIC SUSPENSION EVENT) | |
| DETAILED EVENT INFORMATION (E.G., VEHICLE TRAFFIC SUSPENSION) | |
| NODE NUMBER 1 (Pm') | NODE NUMBER 2 (Pn') |
| RELATIVE LOCATION OF EVENT FROM Pm' | |
| DIRECTION IDENTIFICATION FLAG (=1) | |
| ⁞ | |
| EVENT n (TRAFFIC CONGESTION) | |
| CONGESTION RANK | |
| NODE NUMBER 1 (Pm') | NODE NUMBER 2 (Pn') |
| RELATIVE LOCATION 1 OF EVENT FROM FEATURE NODE Pm' (CONGESTION START SIDE) | |
| RELATIVE LOCATION 1 OF EVENT FROM FEATURE NODE Pm' (CONGESTION END SIDE) | |

FIG. 23

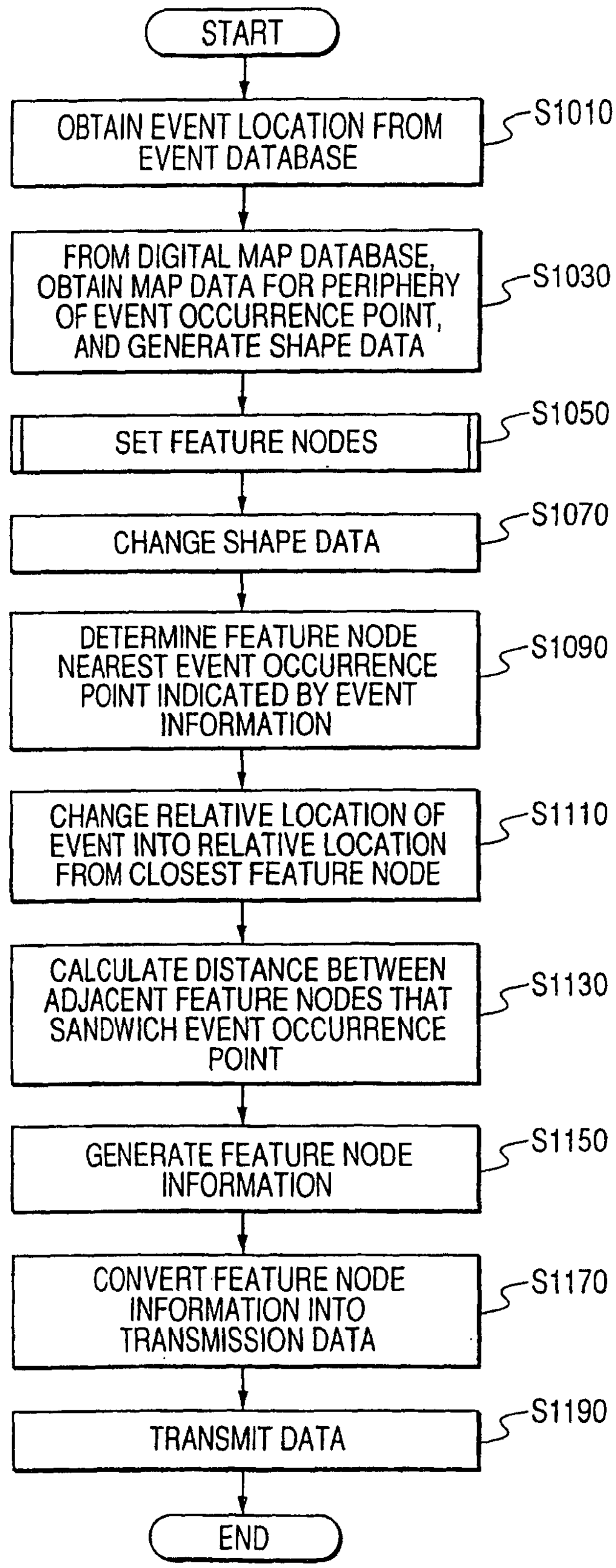
START
OBTAIN EVENT LOCATION FROM EVENT DATABASE
S1010
FROM DIGITAL MAP DATABASE, OBTAIN MAP DATA FOR PERIPHERY OF EVENT OCCURRENCE POINT, AND GENERATE SHAPE DATA
S1030
SET FEATURE NODES
S1050
CHANGE SHAPE DATA
S1070
DETERMINE FEATURE NODE NEAREST EVENT OCCURRENCE POINT INDICATED BY EVENT INFORMATION
S1090
CHANGE RELATIVE LOCATION OF EVENT INTO RELATIVE LOCATION FROM CLOSEST FEATURE NODE
S1110
CALCULATE DISTANCE BETWEEN ADJACENT FEATURE NODES THAT SANDWICH EVENT OCCURRENCE POINT
S1130
GENERATE FEATURE NODE INFORMATION
S1150
CONVERT FEATURE NODE INFORMATION INTO TRANSMISSION DATA
S1170
TRANSMIT DATA
S1190
END

FIG. 24

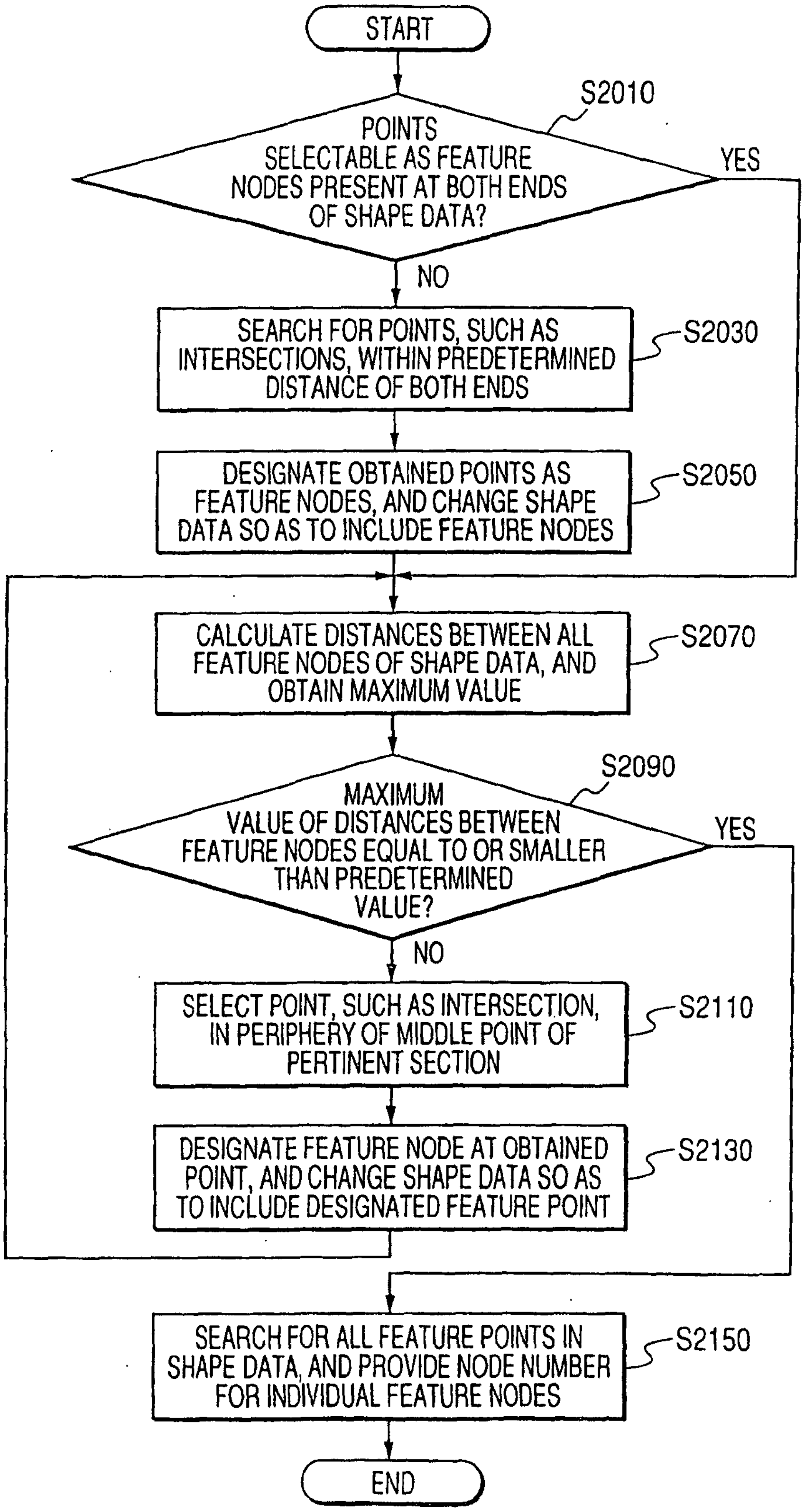
START
S2010
POINTS SELECTABLE AS FEATURE NODES PRESENT AT BOTH ENDS OF SHAPE DATA?
YES
NO
SEARCH FOR POINTS, SUCH AS INTERSECTIONS, WITHIN PREDETERMINED DISTANCE OF BOTH ENDS
S2030
DESIGNATE OBTAINED POINTS AS FEATURE NODES, AND CHANGE SHAPE DATA SO AS TO INCLUDE FEATURE NODES
S2050
CALCULATE DISTANCES BETWEEN ALL FEATURE NODES OF SHAPE DATA, AND OBTAIN MAXIMUM VALUE
S2070
S2090
MAXIMUM VALUE OF DISTANCES BETWEEN FEATURE NODES EQUAL TO OR SMALLER THAN PREDETERMINED VALUE?
YES
NO
SELECT POINT, SUCH AS INTERSECTION, IN PERIPHERY OF MIDDLE POINT OF PERTINENT SECTION
S2110
DESIGNATE FEATURE NODE AT OBTAINED POINT, AND CHANGE SHAPE DATA SO AS TO INCLUDE DESIGNATED FEATURE POINT
S2130
SEARCH FOR ALL FEATURE POINTS IN SHAPE DATA, AND PROVIDE NODE NUMBER FOR INDIVIDUAL FEATURE NODES
S2150
END

FIG. 25

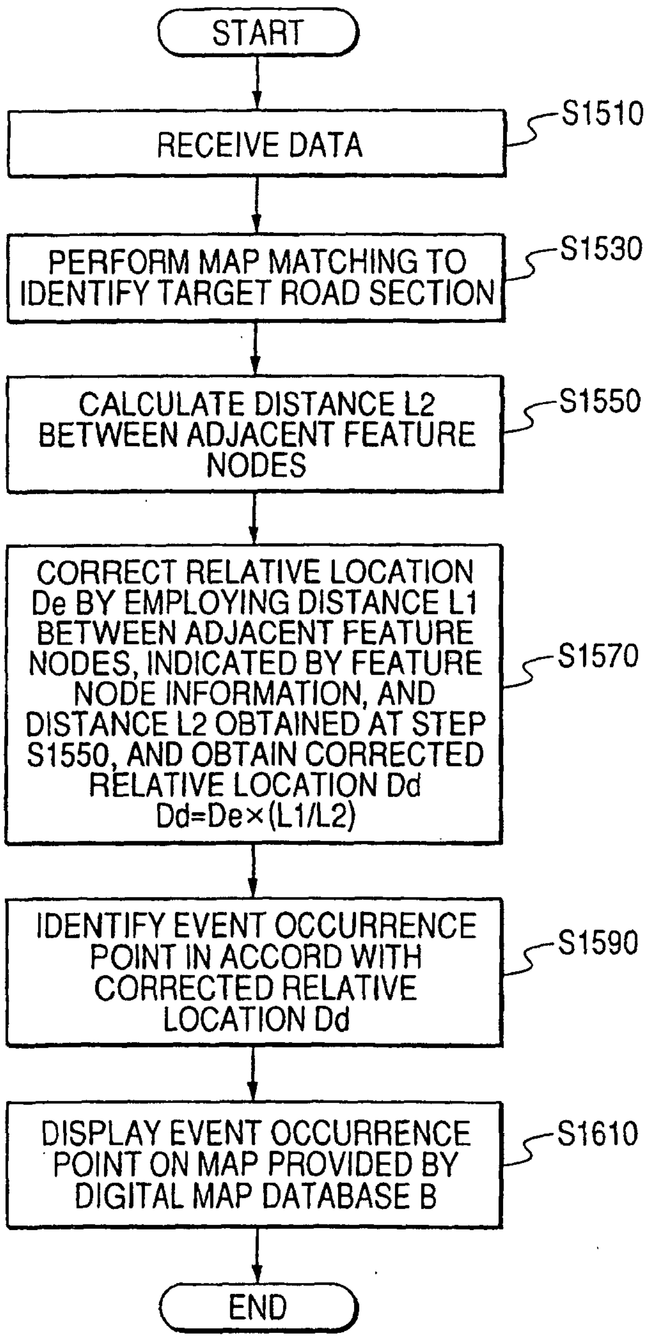
START
RECEIVE DATA
S1510
PERFORM MAP MATCHING TO IDENTIFY TARGET ROAD SECTION
S1530
CALCULATE DISTANCE L2 BETWEEN ADJACENT FEATURE NODES
S1550
CORRECT RELATIVE LOCATION De BY EMPLOYING DISTANCE L1 BETWEEN ADJACENT FEATURE NODES, INDICATED BY FEATURE NODE INFORMATION, AND DISTANCE L2 OBTAINED AT STEP S1550, AND OBTAIN CORRECTED RELATIVE LOCATION Dd Dd=De×(L1/L2)
S1570
IDENTIFY EVENT OCCURRENCE POINT IN ACCORD WITH CORRECTED RELATIVE LOCATION Dd
S1590
DISPLAY EVENT OCCURRENCE POINT ON MAP PROVIDED BY DIGITAL MAP DATABASE B
S1610
END

FIG. 26(a)

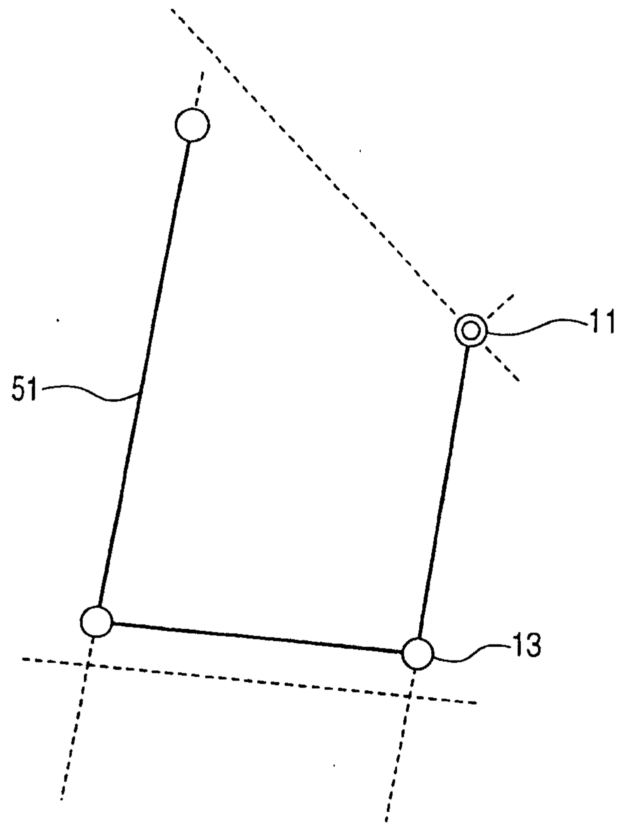


FIG. 26(b)

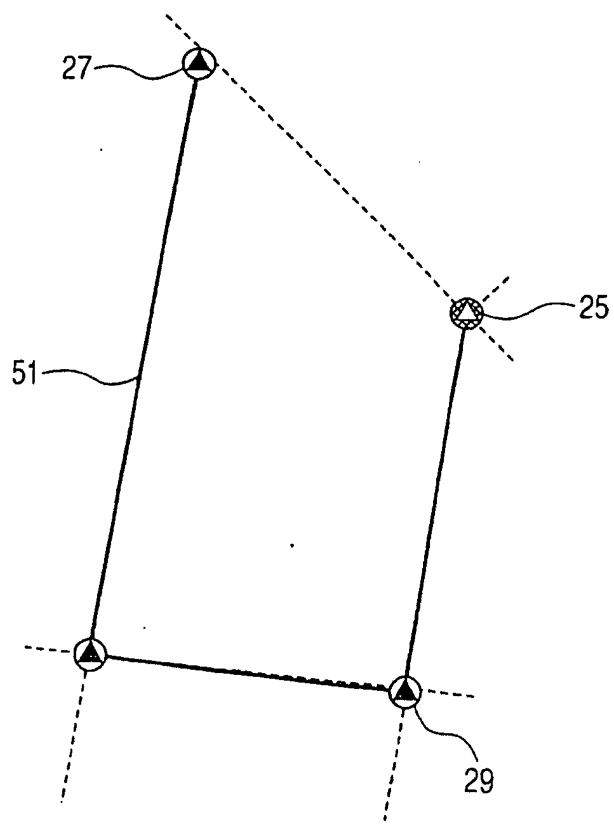

## INTERNATIONAL SEARCH REPORT

International Application No
PCT/JP03/04023

A. CLASSIFICATION OF SUBJECT MATTER
Int.Cl[7] G01C21/00, G08G1/0969

According to International Patent Classification (IPC) or to both national classification and IPC

B. FIELDS SEARCHED

Minimum documentation searched (classification system followed by classification symbols)
Int.Cl[7] G01C21/00-21/36, G09B23/00-29/14, G01C23/00-25/00, G08G1/00-9/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)
WPI(DIALOG)

C. DOCUMENTS CONSIDERED TO BE RELEVANT

| Category* | Citation of document, with indication, where appropriate, of the relevant passages | Relevant to claim No. |
|---|---|---|
| A | JP 2001-41757 A (Matsushita Electric Industrial Co., Ltd.), 16 February, 2001 (16.02.01), (Family: none) | 1-34 |
| A | JP 2001-60298 A (Matsushita Electric Industrial Co., Ltd.), 06 March, 2001 (06.03.01), (Family: none) | 1-34 |
| A | JP 07-129740 A (Sumitomo Electric Industries, Ltd.), 19 May, 1995 (19.05.95), (Family: none) | 1-34 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 June, 2003 (25.06.03) | 08 July, 2003 (08.07.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/04023

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

The inventions of claims 1-23 relate to a "relative position information correction device" or a "relative position information correction method." The inventions of claims 24-34 relate to a "shape vector generation device" or a "shape vector generation method".

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☒ No protest accompanied the payment of additional search fees.

Form PCT/ISA/210 (continuation of first sheet (1)) (July 1998)